# EUROPEAN PATENT SPECIFICATION

(11) **EP 1 903 851 B1**
(45) Date of publication and mention of the grant of the patent: **10.08.2011**
(21) Application number: 06745079.1
(22) Date of filing: 23.06.2006
(51) Int. Cl.: A01F 15/07

(54) **BALING AND BALE WRAPPING APPARATUS AND METHODS**
BALLENPRESS- UND BALLENWICKELVORRICHTUNG UND -VERFAHREN
DISPOSITIF ET PROCEDES DE MISE SOUS FORME DE BALLE ET D'ENVELOPPEMENT DE BALLE

(30) Priority: 23.06.2005 IE 20050426
(43) Date of publication of application: 02.04.2008
(73) Proprietor: Welmount Limited, Ballinrobe Mayo (IE)
(72) Inventor: MCHALE, Padraic, Christopher, County Mayo (IE); HEANEY, James, John, County Mayo (IE); O'CONNOR, Patrick, Thomas, County Mayo (IE); SHERIDAN, Gerard, Patrick, County Mayo (IE); CUMMINS, John, Joseph, County Galway (IE); MCHALE, Martin, William, County Mayo (IE); MCHALE, Paul, Gerard, County Mayo (IE)
(74) Representative: Gorman, Francis Fergus
(86) International application number: PCT/IE2006/000069
(87) International publication number: WO 2006/137046

(56) References cited:
- EP-A- 0 543 145
- EP-A- 0 865 723
- EP-A- 1 077 025
- WO-A-02/076183
- FR-A1- 2 852 781
- US-B1- 6 457 295

## Description

The present invention relates to a method and baling apparatus for forming a bale of material, and in particular, though not limited to such a method and apparatus for forming a cylindrical bale of forage material, such as silage, hay, straw and the like and for at least partially wrapping the formed bale. The invention also relates to a method and a bale wrapper for wrapping a bale of material.

Cylindrical bales of such forage material, typically, are of diameter of approximately 1.25 metres, and axial length of approximately 1.2 metres. In general, such cylindrical bales, in particular, cylindrical bales of grass in which the grass is to be formed into silage are tightly wrapped in a plastics film material, which typically, is black, white or green, and in general, is opaque. The bales are wrapped with the plastics film material to be airtight. One surface of the film material is provided with a self-adhesive coating so that as the bale is wrapped with each turn of the wrapping material overlapping a previous adjacent turn to form two or more layers of wrapping material, the overlapping layers are bonded to each other by the self-adhesive coating.

Bale wrappers for wrapping such cylindrical bales are commonly referred to as two axes wrappers. Such bale wrappers can be classified into two broad types. In one type the bale is rotated simultaneously about two axes perpendicular to each other, one of which coincides with the central geometric axis of the bale, and while the bale is being rotated about the two axes, wrapping material drawn from a wrapping material dispenser is wrapped onto the bale. In the other type of bale wrapper the bale is rotated about its central geometric axis, and a wrapping material dispenser is simultaneously revolved about the bale about an axis of revolution perpendicular to the bale axis. As the bale is rotated and the wrapping material dispenser is revolved, wrapping material is drawn from the dispenser and wrapped onto the bale. In each case each turn of the wrapping material extends in a generally axial direction from end to end of the bale parallel to the bale axis.

In bale wrappers which rotate the bale simultaneously about two axes, a pair of parallel spaced apart horizontally extending bale support rollers rotatably carried on a bale support table are provided for supporting the bale on the bale support table with the geometric central axis of the bale extending horizontally. The rollers rotate the bale about its central geometric axis, and the bale support table rotates the bale about a vertical axis, which extends through the central axis of the bale and substantially midway between the opposite ends of the bale. Thus, as the bale is simultaneously rotated about the respective horizontal and vertical axes, the wrapping material is drawn from the dispenser and wrapped onto the bale.

In bale wrappers which rotate the bale about one axis only, such bale wrappers comprise a pair of parallel spaced apart horizontally extending bale support rollers, which support and rotate the bale about a horizontal axis, which coincides with its geometric central axis. One or a pair of wrapping material dispensers are mounted on a carrier which revolves the dispensers around the bale supported on the bale support rollers. The dispensers are revolved about a horizontal axis of revolution which extends through the central axis of the bale substantially midway between the respective opposite ends of the bale on the bale support rollers. Thus, as the bale is rotated about its central axis simultaneously as the wrapping material dispenser or dispensers are being revolved about the horizontal axis of revolution, wrapping material is drawn from the wrapping material dispenser or dispensers and is wrapped onto the bale in axial end to end turns.

In general, once the bale has been wrapped on either type of bale wrapper, the wrapped bale is tipped onto the ground.

The wrapping material wrapped onto the bale is most vulnerable to damage adjacent the circumferential surface of the bale, and in particular adjacent the corners at the axial opposite ends of the bale where the circumferential surface of the bale meets the respective axial opposite ends of the bale. However, these are the areas of the bale over which the number of layers of wrapping material resulting from the respective turns of the wrapping material is at a minimum. In general, the bales are wrapped so that the number of layers of the wrapping material on the circumferential surface and at the respective corners of the bale are between four and eight layers, in order to minimise the risk of puncturing the wrapping material as the bale strikes the ground, and during subsequent handling of the bale. However, in order to ensure that the entire circumferential surface of the bale and the corners thereof are wrapped to a depth of four to six layers of the wrapping material, the depth of the wrapping material on the axial opposite ends of the bale, and in particular, towards the centre of the ends of the bale can be up to three to four times the number of layers on the circumferential surface. This is wasteful of wrapping material, since firstly, the axial opposite ends of the bale are least vulnerable to puncturing due to the way the bales tend to fall, or as a result of normal handling, and secondly, the large number of layers of wrapping material on the respective opposite ends of the bale are excessive even if the opposite ends of the bale were vulnerable to puncturing.

Accordingly, there is a need for apparatus which overcomes this problem.

The present invention is directed towards providing a method and apparatus for forming material into a bale and for at least partially wrapping the bale, which addresses this problem, and the invention is also directed towards providing a method and a bale wrapper for wrapping a bale, which likewise addresses this problem.

According to the invention there is provided baling apparatus for forming material into a cylindrical bale, the baling apparatus comprising a baler, which defines a bale forming chamber defining a longitudinally extending geometric main central axis, and within which the bale is formed, the baler comprising at least two segments, at least one of which is moveable relative to the other between a bale forming state whereby the segments co-operate to form the bale forming chamber, and a discharge state with two of the segments defining a discharge opening from the bale forming chamber for accommodating discharge of the bale therefrom, a bale support located adjacent the baler for receiving a bale discharged therefrom and for supporting the bale during wrapping thereof, wherein a first dispenser is located to one side of the discharge opening for dispensing wrapping material for circumferentially wrapping the bale, a holding means is located to the opposite side of the discharge opening to that on which the first dispenser is located for gripping the wrapping material extending from the first dispenser with the wrapping material extending across the discharge opening, so that when the bale is discharged from the bale forming chamber through the discharge opening onto the bale support the wrapping material is engaged by the circumferential surface of the bale, and is drawn from the first dispenser onto the bale to extend circumferentially partly around the circumferential surface of the bale.

Preferably, the bale support comprises a bale rotating means for rotating a bale supported thereon about a first wrapping axis substantially coinciding with a geometrical central axis of the bale, so that as the bale is rotated by the bale rotating means, wrapping material is drawn from the first dispenser to wrap the bale circumferentially around the circumferential surface thereof.

In one embodiment of the invention a second dispenser is mounted for revolving about the bale support for dispensing wrapping material onto the bale, the second dispenser being revolvable about a second wrapping axis of revolution extending at an angle greater than zero to the first wrapping axis for wrapping the bale with the wrapping material from the second dispenser extending axially around the bale end to end parallel to the geometric central axis of the bale.

Preferably, the second dispenser is operable for dispensing at least one turn of the wrapping material from the second dispenser around the bale with the wrapping material from the first dispenser extending partly around the bale prior to rotation of the bale by the bale rotating means for retaining the wrapping material from the first dispenser on the circumferential surface of the bale.

In one embodiment of the invention, the bale rotating means is operable for rotating the bale about the first wrapping axis simultaneously as the second dispenser is being revolved about the second wrapping axis for simultaneously wrapping the bale with wrapping material from the first and second dispensers.

Advantageously, the second dispenser is revolvable about the second wrapping axis simultaneously as the bale rotating means is rotating the bale about the first wrapping axis for wrapping the bale with overlapping turns of the wrapping material from the second dispenser.

In one embodiment of the invention the second dispenser is mounted on a carrier, the carrier being revolvable about the second wrapping axis for in turn revolving the second dispenser about the second wrapping axis.

Preferably, the carrier comprises a carrier ring member which extends around the bale support and defines a geometric central axis which coincides with the second wrapping axis, the carrier ring member being rotatable about its central axis for revolving the second dispenser around the second wrapping axis.

In one embodiment of the invention a pair of second dispensers are mounted on the carrier ring member at equi-spaced apart intervals around the carrier ring member.

Preferably, the second wrapping axis about which each second dispenser is revolvable extends substantially perpendicularly to the first wrapping axis about which a bale is rotated by the bale rotating means on the bale support, and intersects the first wrapping axis substantially halfway between respective axially opposite ends of the bale.

Advantageously, the first wrapping axis extends parallel to the main central axis defined by the bale forming chamber.

Ideally, the first dispenser is located for holding a roll of wrapping material with the longitudinally extending geometric central axis of the roll of wrapping material extending parallel to the main central axis defined by the bale forming chamber. Preferably, the first dispenser is adapted for holding a roll of wrapping material, the transverse width of the wrapping material being greater than the axial length of the bale, so that as the wrapping material from the first dispenser is being wrapped circumferentially around the bale, portions of the wrapping material adjacent respective opposite side edges thereof embrace the bale to engage respective axially opposite ends thereof.

In one embodiment of the invention a main urging means is provided for urging a portion of the wrapping material extending between the first dispenser and a bale supported on the bale support into engagement with the holding means.

Preferably, the main urging means is responsive to completion of wrapping of the bale with the wrapping material from the first dispenser for urging the wrapping material from the first dispenser into engagement with the holding means.

Advantageously, the main urging means is responsive to the bale being rotated by the bale rotating means through a predetermined number of rotations for urging the wrapping material from the first dispenser into engagement with the holding means.

In one embodiment of the invention the main urging means comprises an idler roller engageable with the wrapping material extending between the first dispenser and a bale supported on the bale support, the idler roller being moveable towards the holding means for urging the wrapping material from the first dispenser into engagement with the holding means.

Preferably, the idler roller is carried on a carrier arm which is pivotally mounted, and a ram is provided for pivoting the carrier arm for in turn urging the idler roller for urging the wrapping material from the first dispenser into engagement with the holding means.

In another embodiment of the invention the holding means comprises a pair of clamping plates, and a means is provided for moving at least one of the clamping plates relative to the other from a release state with the clamping plates spaced apart from each other, and a clamping state for clamping the wrapping material from the first dispenser therebetween.

Preferably, a cutting means is provided for severing the wrapping material dispensed by the first dispenser intermediate the holding means and the bale. Advantageously, the cutting means is mounted on the holding means.

Advantageously, the cutting means comprises a cutting blade, and a means is provided for moving the cutting means transversely across the wrapping material dispensed by the first dispenser from one side edge of the wrapping material to another.

In one embodiment of the invention, the first dispenser and the holding means are located intermediate the baler and the bale support.

In another embodiment of the invention the first dispenser is mounted on one of the segments which define the bale forming chamber.

Preferably, the first dispenser is mounted on an upper one of the segments which define the bale forming chamber.

Advantageously, the upper segment is the moveable segment, and is moveable upwardly from the bale forming state to the discharge state for defining with the at least one other segment the discharge opening.

Ideally, the upper segment is pivotally coupled to one of the at least one other segments about a first pivot axis and is pivotal relative to the one of the at least one other segment about the first pivot axis from the bale forming state to the discharge state.

In one embodiment of the invention the first pivot axis extends parallel to the main central axis of the bale forming chamber.

Advantageously, the upper segment defines an arcuate portion of the periphery of the bale forming chamber, and the arcuate portion extends for approximately 180° of the periphery of the bale forming chamber.

In another embodiment of the invention one of the segments defining the bale forming chamber is a lower segment, and is operable from the bale forming state to a discharge state for transferring the bale from the bale forming chamber through the discharge opening and through a locus of transfer to the bale support.

In a further embodiment of the invention the first dispenser and the holding means are located on respective opposite sides of the locus of transfer of the bale from the baler to the bale support, so that the holding means holds the wrapping material from the first dispenser with the wrapping material extending from the first dispenser to the holding means extending across the locus of transfer.

In another embodiment of the invention the upper segment and the lower segment define the discharge opening.

In a further embodiment of the invention the upper segment and the lower segment are sequentially operable into the respective discharge states so that the upper segment is in the discharge state prior to the lower segment being in the discharge state.

Preferably, the lower segment is pivotally mounted about a second pivot axis adjacent the portion thereof which defines the discharge opening with the upper segment and is urgeable upwardly and inwardly into the bale forming chamber about the second pivot axis for transferring the bale from the bale forming chamber to the bale support.

Advantageously, the lower segment is urgeable about the second pivot axis in a generally upwardly direction from the bale forming state to the discharge state for urging the bale from the bale forming chamber along the locus of transfer.

In one embodiment of the invention the second pivot axis extends parallel to the main central axis defined by the bale forming chamber.

Ideally, the first and second pivot axes are spaced apart from each other approximately 180° around the circumferential periphery of the bale forming chamber.

In one embodiment of the invention the lower segment defines an arcuate portion of the periphery of the bale forming chamber which extends through an arcuate distance in the range of 80° to 140°. Preferably, the arcuate portion of the periphery of the bale forming chamber defined by the lower segment extends through an arcuate distance in the range of 90° to 130°. Advantageously, the arcuate portion of the periphery of the bale forming chamber defined by the lower segment extends through an arcuate distance of approximately 110°.

In another embodiment of the invention one of the segments forming the bale forming chamber is a stationary segment located intermediate the upper segment and the lower segment.

In one embodiment of the invention the main central axis defined by the bale forming chamber extends substantially horizontally.

In another embodiment of the invention the bale forming chamber is cylindrical.

In a further embodiment of the invention the first dispenser is adapted for dispensing non-perforated plastics sheet wrapping material.

The invention also provides a method for forming and wrapping a cylindrical bale of material, the method comprising forming the bale in a baler, transferring the bale from the baler through a discharge opening in the baler to a bale support adjacent the baler on which the bale is supported during wrapping, extending a sheet of wrapping material from a first dispenser across the discharge opening of the baler, so that as the bale is transferred from the baler to the bale support, a portion of a circumferential surface of the bale is circumferentially wrapped with the wrapping material from the first dispenser.

In one embodiment of the invention the method further comprises rotating the bale on the bale support about a first wrapping axis substantially coinciding with a geometric longitudinally extending central axis of the bale for drawing wrapping material from the first dispenser to wrap the circumferential surface of the bale circumferentially with the wrapping material.

In another embodiment of the invention the bale is wrapped with wrapping material from a second dispenser drawn from the second dispenser as the second dispenser is revolved around the bale support about a second wrapping axis which extends at an angle greater than zero degrees to the first wrapping axis about which the bale is rotated on the bale support.

Preferably, the bale is simultaneously rotated about the first wrapping axis while the second dispenser is being revolved about the second wrapping axis for simultaneously wrapping of the bale with wrapping material from the first and second dispensers.

The invention also provides a bale wrapper for wrapping a cylindrical bale with wrapping material, the bale wrapper comprising a bale support for supporting the bale during wrapping, a transfer means for transferring a bale to be wrapped along a locus of transfer onto the bale support, wherein a first dispenser is located for dispensing wrapping material for circumferentially wrapping the bale, and a holding means is spaced apart from the first dispenser for holding the wrapping material with the wrapping material extending from the first dispenser across the locus of transfer, so that as the bale is being transferred along the locus of transfer onto the bale support, the wrapping material is engaged by the circumferential surface of the bale, and is drawn from the first dispenser onto the bale to extend circumferentially partly around the circumferential surface of the bale.

In one embodiment of the invention, the bale support comprises a bale rotating means for rotating the bale supported thereon about a first wrapping axis substantially co-inciding with a geometric central axis of the bale, so that as the bale is rotated by the bale rotating means, wrapping material is drawn from the first dispenser to wrap the bale circumferentially around the circumferential surface thereof.

Preferably, a second dispenser is provided for dispensing wrapping material therefrom for wrapping the bale supported on the bale support, the second dispenser being revolvable about a second wrapping axis extending at an angle greater than zero to the first wrapping axis, so that as the second dispenser is revolved about the second wrapping axis wrapping material is drawn from the second dispenser and wrapped around the bale in a general direction around the second wrapping axis.

Advantageously, the second dispenser is revolvable about the second wrapping axis simultaneously as the bale rotating means rotates the bale about the first wrapping axis for wrapping the bale with the wrapping material from the second dispenser with the wrapping material extending in the general direction around the second wrapping axis.

In one embodiment of the invention the rate at which the second wrapping material dispenser is revolvable about the second wrapping axis is controllable relative to the rate at which the bale rotating means rotates the bale about the first wrapping axis for determining the amount by which each turn of the wrapping material from the second dispenser extending in the general direction around the second wrapping axis overlaps the immediately preceding turn of the wrapping material from the second dispenser.

In another embodiment of the invention the first and second dispensers are arranged relative to each other so that wrapping material is drawn from the first dispenser simultaneously as wrapping material is drawn from the second dispenser when the bale rotating means rotates the bale about the first wrapping axis simultaneously as the second dispenser is being revolved about the second wrapping axis for simultaneously wrapping the bale with wrapping material from the first dispenser extending circumferentially around the bale in the general direction around the first wrapping axis and for wrapping the bale with wrapping material from the second dispenser extending in the general direction around the second wrapping axis.

Preferably, the second wrapping axis extends perpendicularly to the first wrapping axis.

Advantageously, the second wrapping axis intersects the first wrapping axis at a position intermediate the axially opposite ends of the bale relative to the first wrapping axis.

The invention also provides a bale wrapper for wrapping a bale with wrapping material, the bale wrapper comprising a bale support for supporting the bale during wrapping, a transfer means for transferring a bale to be wrapped along a locus of transfer onto the bale support, wherein a first dispenser is located for dispensing wrapping material for wrapping the bale, and a holding means is spaced apart from the first dispenser for holding the wrapping material with the wrapping material extending from the first dispenser and extending across the locus of transfer, so that as the bale is being transferred along the locus of transfer onto the bale support, the wrapping material is engaged by the bale, and is drawn from the first dispenser onto the bale so that when the bale is transferred onto the bale support the wrapping material extends partly around the bale in a general direction around a first wrapping axis, and a bale rotating means for rotating the bale supported on the bale support about the first wrapping axis for drawing wrapping material from the first dispenser to wrap the bale with the wrapping material extending around the bale in the general direction around the first wrapping axis.

Preferably, a second dispenser is provided for dispensing wrapping material therefrom for wrapping the bale supported on the bale support, the second dispenser being revolvable about a second wrapping axis extending at an angle greater than zero to the first wrapping axis and being arranged so that as the second dispenser is revolved about the second wrapping axis wrapping material is drawn from the second dispenser and is wrapped around the bale in a general direction around the second wrapping axis.

Advantageously, the second dispenser is revolvable about the second wrapping axis simultaneously as the bale rotating means rotates the bale about the first wrapping axis for wrapping the bale with the wrapping material from the second dispenser with the wrapping material extending in the general direction around the second wrapping axis, and each turn of the wrapping material from the second dispenser overlapping an adjacent immediately preceding turn.

In one embodiment of the invention the rate at which the second wrapping material dispenser is revolvable about the second wrapping axis is controllable relative to the rate at which the bale rotating means rotates the bale about the first wrapping axis for determining the amount by which each turn of the wrapping material from the second dispenser overlaps the immediately preceding turn thereof.

In another embodiment of the invention the first and second dispensers are arranged relative to each other so that wrapping material is drawn from the first dispenser simultaneously as wrapping material is drawn from the second dispenser when the bale rotating means rotates the bale about the first wrapping axis simultaneously as the second dispenser is being revolved about the second wrapping axis for simultaneously wrapping the bale with wrapping material from the first dispenser extending in the general direction around the first wrapping axis and the wrapping material from the second dispenser extending in the general direction around the second wrapping axis.

In one embodiment of the invention the bale is a cylindrical bale, and the bale rotating means comprises a pair of parallel spaced apart bale supporting rollers, at least one of which is driven for rotating the bale about the first wrapping axis, the first wrapping axis co-inciding with the geometric central axis of the bale.

The invention also provides a method for wrapping a cylindrical bale of material, the method comprising transferring the bale along a locus of transfer onto a bale support, extending a sheet of wrapping material from a first dispenser across the locus of transfer so that as the bale is transferred along the locus of transfer onto the bale support, the wrapping material is engaged by the circumferential surface of the bale and is drawn from the first dispenser onto the bale to extend circumferentially around the circumferential surface of the bale.

Preferably, the method further comprises rotating the bale on the bale support about a first wrapping axis substantially coinciding with a geometric longitudinally extending central axis of the bale for drawing wrapping material from the first dispenser to wrap the circumferential surface of the bale circumferentially with the wrapping material.

Advantageously, the bale is wrapped with wrapping material from a second dispenser drawn from the second dispenser as the second dispenser is revolved around the bale support about a second wrapping axis which extends at an angle greater than zero degrees to the first wrapping axis about which the bale is rotated on the bale support.

In one embodiment of the invention, the bale is simultaneously rotated about the first wrapping axis while the second dispenser is being revolved about the second wrapping axis for simultaneously wrapping of the bale with wrapping material from the first and second dispensers.

The invention further provides a method for wrapping a bale with wrapping material, the method comprising transferring the bale to be wrapping along a locus of transfer onto the bale support, extending wrapping material from a first dispenser to a holding means across the locus of transfer so that as the bale is being transferred along the locus of transfer onto the bale support the wrapping material is engaged by the bale and is drawn from the first dispenser onto the bale so that when the bale is transferred onto the bale support the wrapping material extends partly around the bale in a general direction around a first wrapping axis, and rotating the bale on the bale support about the first wrapping axis for drawing wrapping material from the first dispenser to wrap the bale with the wrapping material extending around the bale in the general direction around the first wrapping axis.

Preferably, a second dispenser is revolved about a second wrapping axis extending at an angle greater than zero to the first wrapping axis for wrapping the bale supported on the bale support with wrapping material from the second dispenser, so that as the second dispenser is revolved about the second wrapping axis, wrapping material is drawn from the second dispenser and is wrapped around the bale in a general direction around the second wrapping axis.

In one embodiment of the invention the bale is simultaneously wrapped with wrapping material from the first and second dispensers as the bale is rotated about the first wrapping axis, and the dispenser is simultaneously revolved around the second wrapping axis.

The advantages of the invention are many. In particular, the wrapping method and the bale wrapper according to the invention significantly reduces the amount of wrapping material which is required to wrap a cylindrical bale, while at the same time provides an adequate number of layers of wrapping material on both the circumferential surface of the bale and the corners at the axial opposite ends of the bale where the circumferential surface meets the respective opposite ends thereof. By virtue of the fact that the circumferential surface of the bale is circumferentially wrapped with the wrapping material from the first dispenser, the number of layers of wrapping material to be provided by the axially extending turns of the wrapping material from the second dispenser is significantly reduced. Indeed, in certain cases, if desired, the majority of the number of layers of the wrapping material which are required on the circumferential surface can be provided by the wrapping material from the first dispenser. Thereafter only the number of layers of wrapping material which are required for wrapping the respective opposite ends of the bale need be provided by turns of wrapping material from the second dispenser.

A particularly important advantage of the invention is the simplicity of the invention whereby the first dispenser for dispensing the wrapping material for circumferentially wrapping the circumferential surface of the bale and the areas of the corners thereof is mounted so that the bale is partly circumferentially wrapped as the bale is being transferred along the locus of transfer onto the bale support on which the bale is wrapped. By rotating the bale about its central geometric axis on the bale support with the wrapping material from the first dispenser extending partly around the bale, as the bale rotates wrapping material is drawn from the first dispenser, and is thus circumferentially wrapped onto the circumferential surface of the bale. By providing the wrapping material of the first dispenser to be of transverse width greater than the axial length of the bale, and by arranging the first dispenser relative to the bale support, the wrapping material from the first dispenser extends around the corners of the bale onto the opposite ends thereof, thus embracing the bale and ensuring a sufficient number of layers of the wrapping material on both the circumferential surface and the corners of the bale.

A further advantage of the invention is achieved by wrapping the bale with wrapping material from the second dispenser with at least one turn extending in a longitudinal direction parallel to the axis of the bale on the bale being initially transferred onto the bale support, since the one or more turns of the wrapping material from the second dispenser serves to better secure the wrapping material from the first dispenser onto the bale, thereby ensuring that on rotation of the bale by the rotating means on the bale support, the wrapping material from the first dispenser is tightly wrapped onto the circumferential surface of the bale.

The bale wrapper is also suitable for wrapping bales which are not of cylindrical shape, for example, parallel-piped bales, and in which case, the bale is wrapped around one of its axis, which would correspond with the first wrapping axis with wrapping material drawn from the first dispenser, and is wrapped around another of its axis extending at an angle greater than zero to the first wrapping axis by wrapping material drawn from the second dispenser as the second dispenser is revolved around the second wrapping axis.

The bale wrapper according to the invention provides a particularly simple and effective bale wrapper, whereby a bale may be transferred readily from a baler or the ground onto the bale support for wrapping thereof.

The baling apparatus according to the invention has many advantages, in that it incorporates in a single integral unit a baler and a bale wrapper, and the bale wrapper has all the advantages of the bale wrapper according to the invention. By mounting the first dispenser on the upper pivotal segment of the baler a particularly advantageous construction of apparatus is provided, and by mounting the holding means intermediate the baler and the bale wrapper at a level below the second pivot axis of the lower arcuate segment of the baler, the wrapping material extending between the first dispenser and the holding means extends directly across the locus of transfer of the bale as the bale is being transferred from the bale forming chamber onto the bale support.

Further advantages of the invention will be readily apparent to those skilled in the art.

The invention will be more clearly understood from the following description of some preferred embodiments thereof, which are given by way of example only, with reference to the accompanying drawings, in which:
Fig. 1 is a perspective view of baling apparatus according to the invention for forming and wrapping a cylindrical bale,
Fig. 2 is a side elevational view of the baling apparatus of Fig. 1,
Fig. 3 is a partly transverse cross-sectional side elevational view of the apparatus of Fig. 1,
Fig. 4 is an end elevational view of the baling apparatus of Fig. 1,
Fig. 5 is another end elevational view of the baling apparatus of Fig. 1,
Figs. 6 to 10 are diagrammatic side elevational views of a portion of the baling apparatus of Fig. 1 illustrating the baling apparatus in use,
Fig. 11 is a perspective view of a detail of the apparatus of Fig. 1,
Fig. 12 is a side elevational view of a bale wrapper according to the invention,
Fig. 13 is another side elevational view of the bale wrapper of Fig. 12 illustrating a portion of the bale wrapper in a different position, and
Fig. 14 is a further side elevational view of the bale wrapper of Fig. 12 illustrating the portion of the bale wrapper in a still further different position.

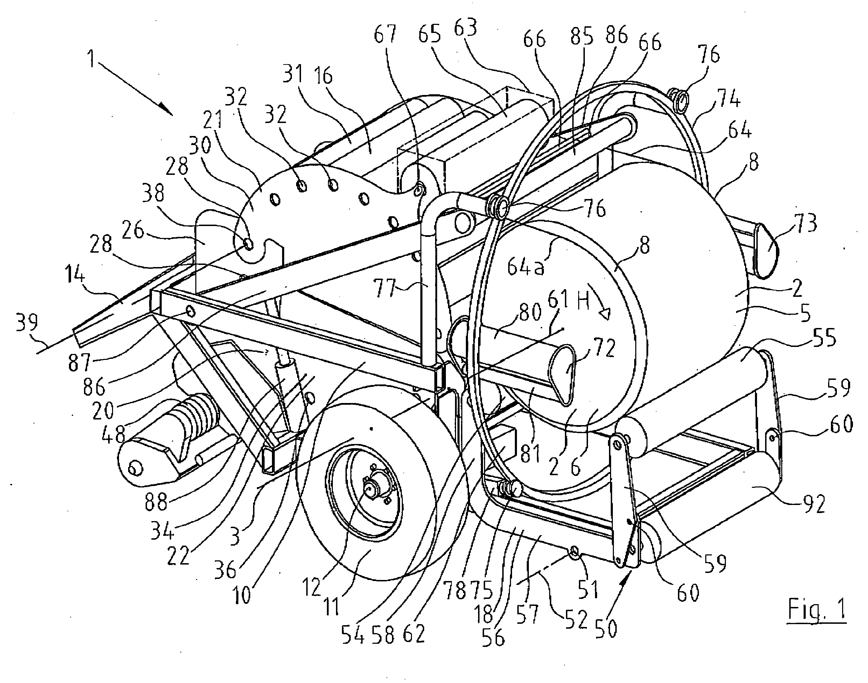

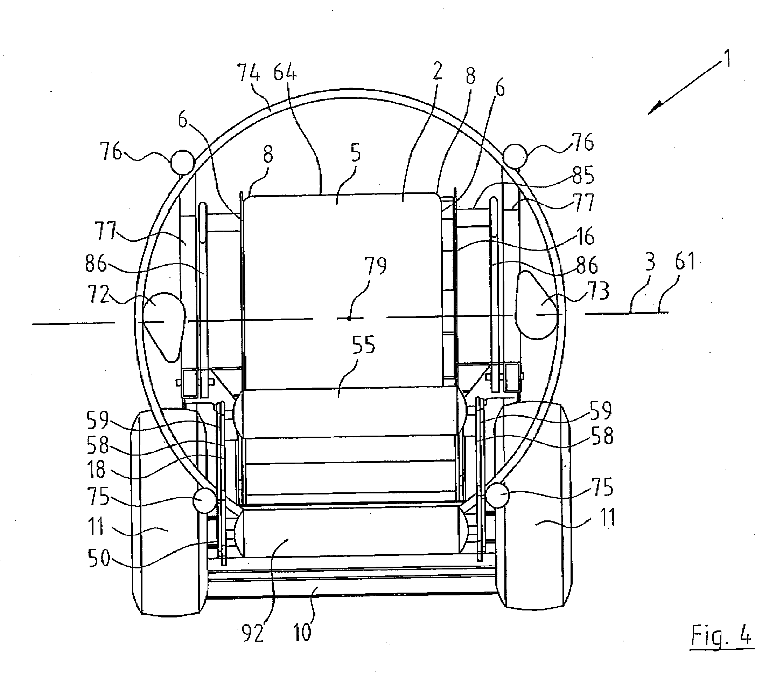

Referring to the drawings, and initially to Figs. 1 to 11 there is illustrated baling apparatus according to the invention, which in this embodiment of the invention is a baler/bale wrapper, and is indicated generally by the reference numeral 1 for forming a bale 2 of hay, straw, silage or the like, and for wrapping the bale 2. The baler/bale wrapper 1 is partly similar to the combined baler/bale wrapper disclosed in published PCT Specification No. WO 02/076183 of the applicant, and accordingly, only those parts of the baler/bale wrapper which are relevant to the present invention will be described in detail.

Each bale 2 produced by the baler/bale wrapper 1 is a cylindrical bale defining a longitudinally extending central axis 3 and having a circumferential surface 5 extending between spaced apart axially opposite radial ends 6 thereof. The circumferential surface 5 meets the respective opposite ends 6 of the bale 2 along circumferential corner edges 8.

The baler/bale wrapper 1 comprises a chassis 10 which is carried on a pair of ground engaging wheels 11 which are rotatably carried on corresponding stub shafts 12, which in turn are carried on the chassis 10. A hitch carrying framework 14 extending forwardly from the chassis 10 carries a hitch (not shown) for hitching the baler/bale wrapper 1 to a suitable towing vehicle, typically, a tractor (not shown). A fixed chamber baler 16 for forming each bale 2 is mounted on the chassis 10. A bale support 18 on which the bales 2 are wrapped is mounted on the chassis 10 rearwardly of the baler 16, and receives bales 2 from the baler 16 as will be described below. The wrapped bales 2 are discharged from the bale support 18 onto the ground as will also be described below.

The baler 16 comprises a stationary segment 20, an upper segment 21 and a lower segment 22, which together co-operate to form a bale forming chamber 23 within which the bales 2 are sequentially formed. The bale forming chamber 23 defines a longitudinally extending geometric main central axis 25 which coincides with the main central axis 3 of a bale 2 formed therein. The stationary segment 20 comprises a pair of spaced apart side walls 26 which are secured to the chassis 10, and between which bale forming means, namely, bale forming rollers 27 extend. The bale forming rollers 27 are carried on shafts 28 which are in turn rotatably carried in the side walls 26 and are driven for rotating the bale forming rollers 24 for urging material in the bale forming chamber 23 to form a bale 2.

The upper segment 21 comprises a pair of spaced apart side walls 30 between which further bale forming means, namely, bale forming rollers 31 extend. The bale forming rollers 31 are carried on shafts 32, which are rotatably mounted in the side walls 30 and are driven for rotating the bale forming rollers 31 in similar fashion as the bale forming rollers 27 for in turn forming material in the bale forming chamber 23 into a bale 2.

The lower segment 22 comprises a pair of spaced apart side walls 34 which also carry a plurality of bale forming means, namely, bale forming rollers 35 which are carried on shafts 36, which in turn are rotatably carried in the side walls 34. The shafts 36 are driven for rotating the bale forming rollers 35 similarly as the bale forming rollers 27 and 31 are rotated for in turn urging material in the bale forming chamber 23 to form a bale 2.

The bale forming rollers 27, 31 and 35 define corresponding respective roller axes 37 which extend parallel to the main central axis 25 of the bale forming chamber 23 and about which the bale forming rollers 27, 31 and 35 are rotatable. The bale forming rollers 27, 31 and 35 on the stationary, upper and lower segments 20, 21 and 22, respectively, together define the circumferential periphery of the bale forming chamber 23. The bale forming rollers 27 of the stationary segment 20 define approximately 70° of the periphery of the bale forming chamber 23. The bale forming rollers 31 of the upper segment 21 define approximately 180° of the periphery of the bale forming chamber 23, while the bale forming rollers 35 of the lower segment 22 define approximately 110° of the periphery of the bale forming chamber 23.

A first drive means comprising a first hydraulically powered motor (not shown) which is mounted on the chassis 10 is provided for driving the shafts 28, 32 and 36 for in turn rotating the bale forming rollers 27, 31 and 35 for forming the bale in the bale forming chamber 23. A drive transmission (also not shown) couples the first hydraulically powered motor (not shown) to the shafts 28, 32 and 36. The first hydraulic motor may be powered by an hydraulic power supply mounted on the chassis which would be powered by the power take-off shaft of a tractor towing the baler/bale wrapper 1, or alternatively, may be powered from the hydraulic system of the tractor.

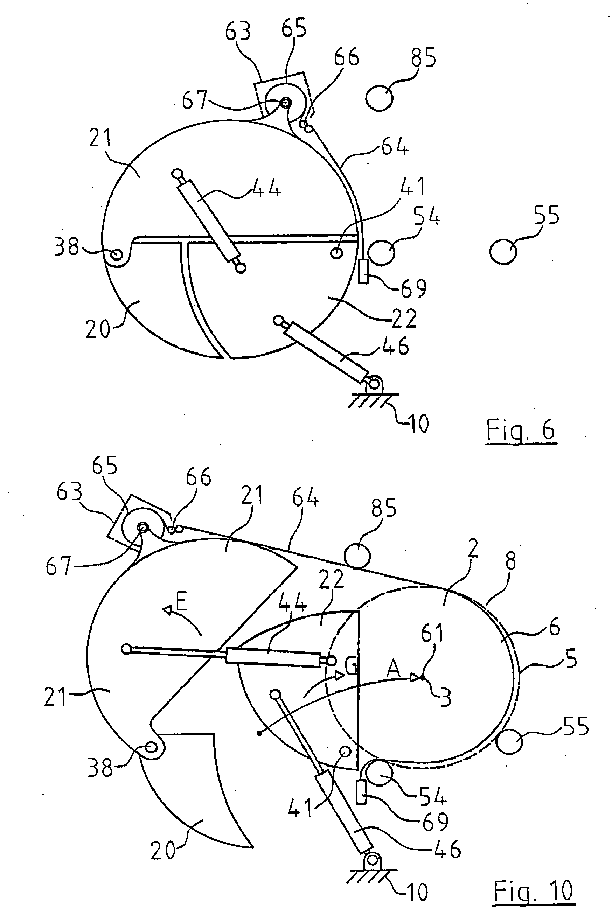

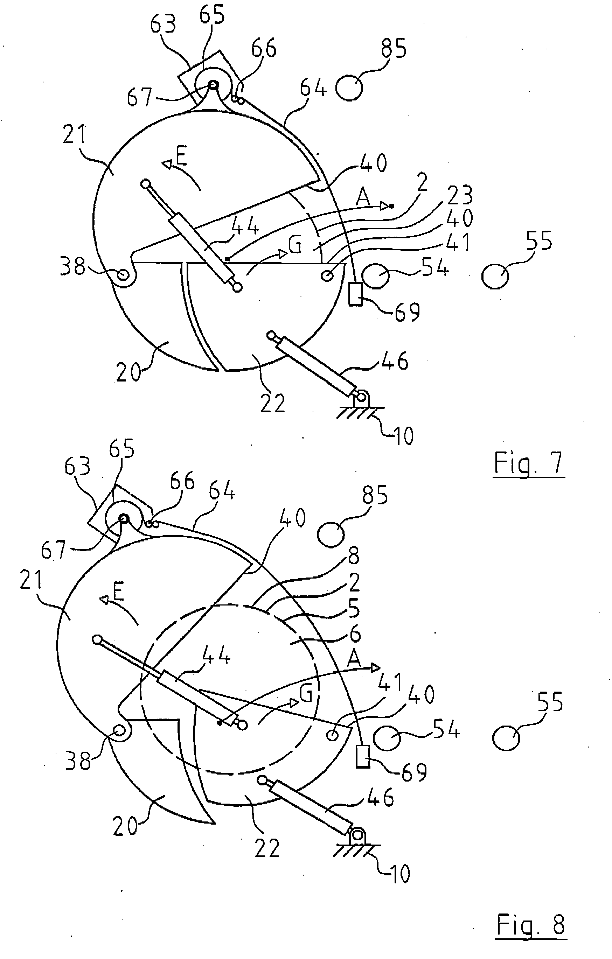

The upper segment 21 is pivotally coupled to the stationary segment 20 by a first pivot shaft 38 which is provided by one of the shafts 28 of the stationary segment 20. The first pivot shaft 38 defines a first pivot axis 39, which extends parallel to the main central axis 25 of the bale forming chamber 23, and about which the upper segment 21 is pivotal between a bale forming state illustrated in Figs. 1 and 6 co-operating with the stationary segment 20 and the lower segment 22 to form the bale forming chamber 23, and a discharge state illustrated in Figs. 8 to 10 defining with the lower segment 22 a discharge opening 40 through which a bale 2 formed by the baler 16 is discharged from the bale forming chamber 23 to the bale support 18, as will be described below, for facilitating discharge of a formed bale 2 from the bale forming chamber 23.

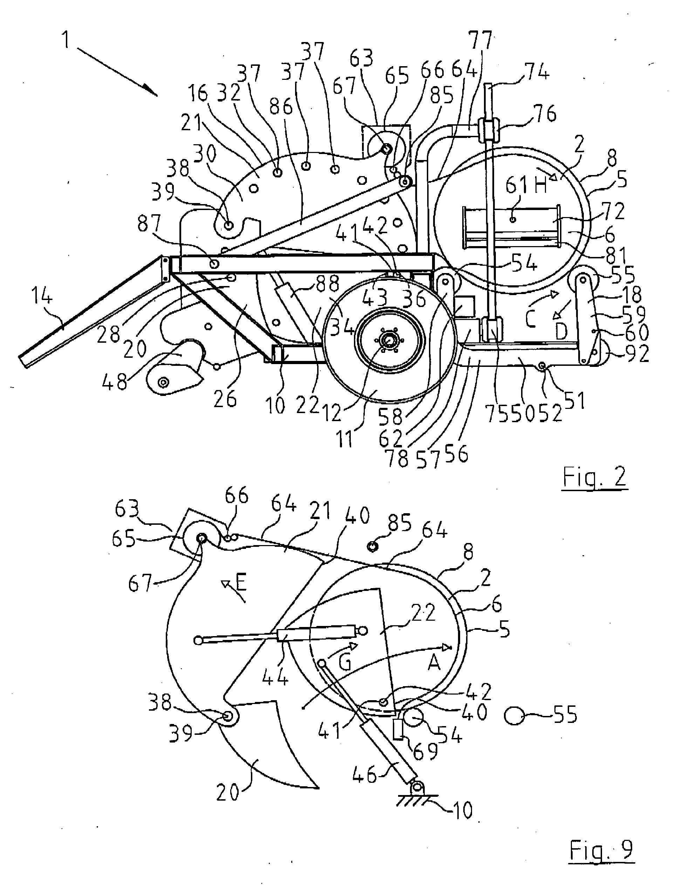

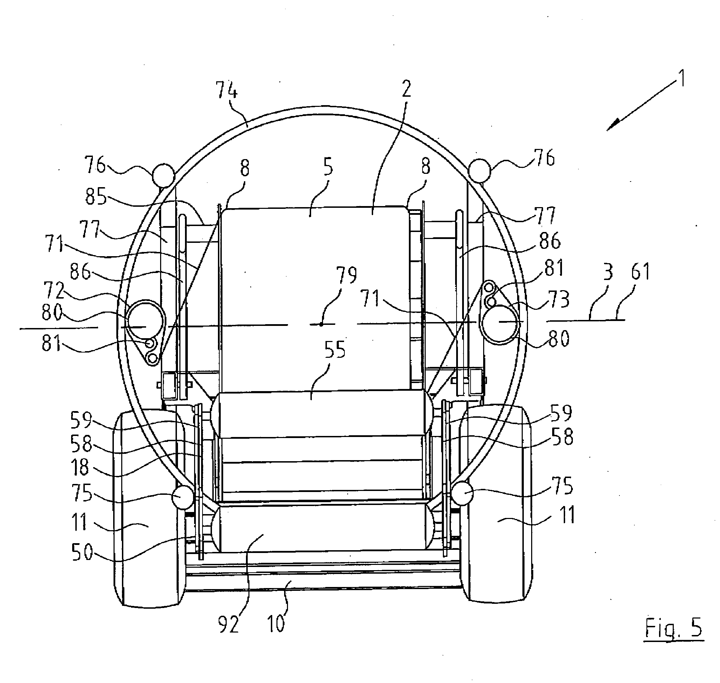

The lower segment 22 is pivotally carried on a second pivot shaft 41 which is formed by one of the shafts 36 extending between the side walls 34. The shaft 36 which forms the second pivot shaft 41 is pivotally carried on upstanding support members 43 extending upwardly from the chassis 10, and defines a second pivot axis 42 about which the lower segment 22 is pivotal between the bale forming state illustrated in Figs. 1 and 5 co-operating with the stationary segment 20 and the upper segment 21 to form the bale forming chamber 23, and a discharge state illustrated in Figs. 9 and 10 for discharging a bale 2 from the bale forming chamber 23 along a locus of transfer illustrated by the arrow A in Figs. 7 to 10 onto the bale support 18 for wrapping the bale 2 as will be described below. The second pivot axis 42 extends parallel to the main central axis 25 of the bale forming chamber 23, and is located at angular distance from the first pivot axis 39 of approximately 180° for accommodating a bale 2 from the bale forming chamber 23.

A first operating means comprising a pair of first hydraulic rams 44 are operably coupled between the upper segment 21 and the lower segment 22 for pivoting the upper segment 21 between the bale forming state and the discharge state. A second operating means comprising a pair of second hydraulic rams 46 are operably coupled between the lower segment 22 and the chassis 10 for pivoting the lower segment 22 between the bale forming state and the discharge state. Hydraulic control circuitry (not shown) is provided for operating the first hydraulic rams 44 prior to commencement of operation of the second hydraulic rams 46 for urging the upper and lower segments 21 and 22 from the bale forming state to the discharge state, so that the upper segment 21 commences to move from the bale forming state to the discharge state prior to the lower segment 22 being urged from the bale forming state to the discharge state. Operation of the first and second rams 44 and 46 is reversed for returning the upper and lower segments 21 and 22 from the discharge state to the bale forming state, in that the second rams 46 are operated prior to operation of the first rams 44.

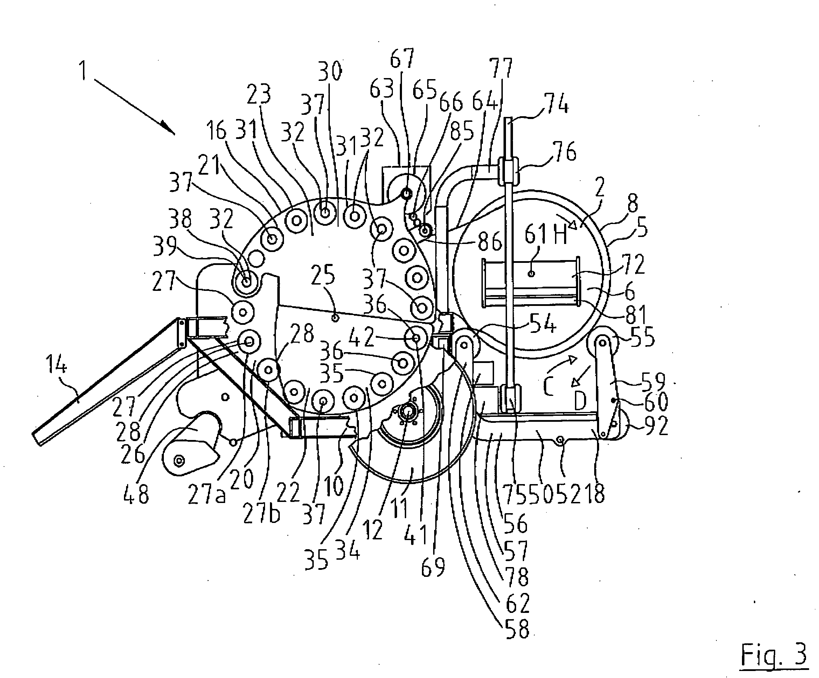

A forward mounted pick-up mechanism 48 mounted on the chassis 10 picks up grass, hay, straw or other material to be baled as the baler/bale wrapper 1 is being towed by the tractor (not shown) which is delivered into the bale forming chamber 23 between a pair of adjacent ones of the bale forming rollers 27 in the stationary segment 20, namely, bale forming rollers 27a and 27b which are spaced apart from each other in order to accommodate the grass, hay, straw or other material into the bale forming chamber 23, see Fig. 3.

The bale support 18 on which the bales 2 are supported during wrapping thereof comprises a sub-assembly 50 which is pivotally mounted on the chassis 10 by pivot shafts 51 which define a common tilting axis 52 about which the sub-assembly 50 is tiltable for discharging a wrapped bale from the sub-assembly 50. The sub-assembly 50 carries a pair of spaced apart bale supporting rollers, namely, a forward bale supporting roller 54 and a rearward bale supporting roller 55 for supporting and rotating a bale 2 thereon during wrapping of the bale. A pair of spaced apart L-shaped members 56 of the sub-assembly 50 each comprise a longitudinally extending leg 57 which is pivotally carried on the corresponding pivot shaft 51, and an upstanding leg 58 which rotatably carries the forward bale supporting roller 54. A pair of spaced apart upstanding carrier members 59 extending upwardly from and pivotally connected to the respective longitudinally extending legs 57 of the corresponding L-shaped members 57 rotatably carry the rearward bale supporting roller 55. Pivot shafts 60 pivotally couple the upstanding carrier members 59 to the corresponding L-shaped member 56. A bale rotating means for rotating a bale 2 supported on the bale supporting rollers 54 and 55, during wrapping, about a first wrapping axis 61, which coincides with the central axis 3 of the bale 2 is provided by the forward bale supporting roller 54, which is driven by a second drive means, namely, a second hydraulically powered drive motor 62 mounted on one of the L-shaped members 56. The rearward bale supporting roller 55 is an idler roller.

A first wrapping material dispenser 63 is mounted on the upper arcuate segment 21 of the baler 16, above the locus A along which the bale 2 is transferred from the baler 16 onto the bale support 18, for dispensing wrapping material 64 from a roll 65 thereof for circumferentially wrapping the circumferential surface 5 of a bale 2 supported on the bale supporting rollers 54 and 55 as the bale 2 is rotated about the first wrapping axis 61 by the bale supporting rollers 54 and 55. The wrapping material 64 is non-perforated sheet plastics film material and is coated with a self-adhesive coating on one side. The first dispenser 63 rotatably carries the roll 65 of the wrapping material 64 and comprises a tensioning mechanism 66, which is illustrated in block representation and will be well known to those skilled in the art, for tensioning the wrapping material 64 as it is being drawn from the roll 65 for wrapping circumferentially around the circumferential surface 5 of the bale 2 in a direction around the first wrapping axis 61. A shaft 67 extending between and rotatably carried on the side walls 30 of the upper segment 21 rotatably carries the roll 65. The shaft 67 extends parallel to the main central axis 25 of the bale forming chamber 23.

In this embodiment of the invention the first dispenser 63 is sized to carry a roll 65 of the wrapping material 64 which is of axial length greater than the axial length of the bale 2. Thus, the transverse width of the wrapping material 64 is greater than the axial length of the bale 2. Additionally, the first dispenser 63 is positioned relative to the position which the bale 2 takes up on the bale supporting rollers 54 and 55, so that as the wrapping material 64 is being circumferentially wrapped around the circumferential surface 5 of the bale 2, opposite side edges 64a of the wrapping material 64 embrace the axial opposite ends 6 of the bale 2 adjacent the corner edges 8, thereby providing added protection to the corner edges 8 of the bale 2. In this embodiment of the invention, the baler/bale wrapper 1 is adapted for forming and wrapping bales 2 of axial length of approximately 1.2 Metres, and the transverse width of the wrapping material 64 dispensed by the first dispenser 63 is approximately 1.4 Metres, so that approximately 100 mm of the wrapping material 64 extends around the corner edges 8 of the bale 2 onto the axial opposite ends 6 thereof.

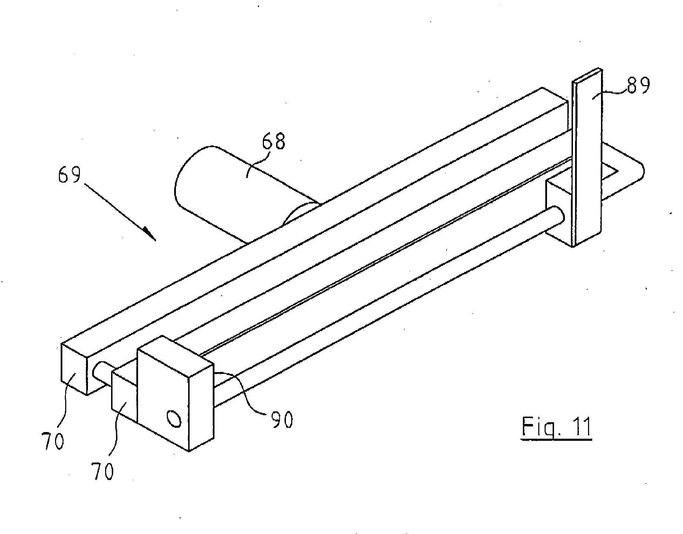

A holding means comprising a holding mechanism 69 located to the rear of and below the second pivot axis 42 about which the lower segment 22 is pivotal holds the wrapping material 64 from the first dispenser 63 with the wrapping material 64 extending across the discharge opening 40 defined between the upper segment 21 and the lower segment 22 when the upper segment 21 is in the discharge state. Accordingly, the holding mechanism 69 holds the wrapping material 64 extending from the first dispenser 63, with the wrapping material 64 extending across the locus A of transfer along which a bale is transferred from the baler 16 to the bale support 18. Thus, as a bale 2 is being transferred by the lower segment 22 from the bale forming chamber 23 onto the forward and rearward bale supporting rollers 54 and 55, the bale 2 engages the wrapping sheet 64 and draws the wrapping sheet 64 from the first dispenser 63 to extend circumferentially around approximately 180° of the circumferential surface 5 of the bale 2 when the bale 2 is supported on the bale supporting rollers 54 and 55. The holding mechanism 69 comprises a pair of clamping plates 70 for clamping and holding the wrapping sheet 64 therebetween, see Fig. 11. An actuating means comprising an hydraulic ram 68 operates the clamping plates 70 between a clamping state for clamping the wrapping sheet 64 therebetween and a release state for facilitating engagement of the wrapping sheet 64 between the clamping plates 70 and release therefrom.

A pair of second wrapping material dispensers 72 and 73 are provided for dispensing respective sheets of wrapping material 71 of non-perforated sheet plastics film material similar to the wrapping material 64 for wrapping a bale 2 supported on the bale supporting rollers 54 and 55 with overlapping turns of the wrapping material 71 extending axially from end to end of the bale 2. The second dispensers 72 and 73 are carried on a carrier means, namely, a circular carrier ring member 74 which revolves the second dispensers 72 and 73 around the bale 2. The carrier ring member 74 is rotatably carried on rollers, two of which, namely, rollers 75 are carried on the chassis 10, and two of which, namely, rollers 76 are rotatably carried on roller carriers 77 which extend upwardly from the chassis 10. The rollers 75 are driven by an hydraulically powered drive motor 78 mounted on the chassis 10 through a drive transmission (not shown) for rotating the carrier ring member 74 about its geometric central axis. The geometric central axis of the carrier ring member 74 defines a second wrapping axis 79 about which the second dispensers 72 and 73 are revolved around a bale 2 supported on the bale supporting rollers 54 and 55. The second wrapping axis 79 extends perpendicularly to the first wrapping axis 61 about which the bale 2 is rotated by the bale supporting rollers 54 and 55 and intersects the first wrapping axis 61 approximately halfway between the ends 6 of the bale 2 when supported on the bale supporting rollers 54 and 55. Accordingly, when the bale 2 is being rotated about the first wrapping axis 61 by the bale supporting rollers 54 and 55 simultaneously as the second dispensers 72 and 73 are being revolved about the second wrapping axis 79, wrapping material 71 is drawn from the second dispensers 72 and 73 for wrapping the bale 2 with overlapping turns of the wrapping material 71 extending axially end to end of the bale 2. The carrier ring member 74 and the second dispensers 72 and 73 are mounted relative to the forward and rearward bale supporting rollers 54 and 55, so that the wrapping material 71 from the second dispensers 72 and 73 are drawn onto the bale 2 between the bale supporting rollers 54 and 55.

The carrier ring member 74 is also operable for revolving the second dispensers 72 and 73 about the second wrapping axis 79 while the bale 2 is stationary on the bale supporting rollers 54 and 55 for applying one turn of the wrapping material 71 from each of the second dispensers 72 and 73 around the bale 2 for securing the wrapping material 64 from the first dispenser 63 which extends partly around the bale 2 after the bale has been transferred from the bale forming chamber 73 to the bale supporting rollers 54 and 55 for securing the wrapping material 64 to the bale prior to commencement of rotation of the bale 2 about the first wrapping axis 61 by the bale supporting rollers 54 and 55 for drawing the wrapping material 64 from the first dispenser 63 for circumferentially wrapping the circumferential surface 5 of the bale 2 and the corner edges 8 with the wrapping material 64.

Each second dispenser 72 and 73 rotatably carries a roll 80 of the wrapping material 71 for dispensing thereof, and a tensioning mechanism 81 for tensioning the wrapping sheet material 71 from the corresponding roll 80 as the wrapping material 71 is being drawn from and wrapped onto the bale 2. The tensioning mechanism 81 of the respective second dispensers 72 and 73 are not illustrated in detail, however, such tensioning mechanisms will be well known to those skilled in the art.

Cut and hold mechanisms (not shown) associated with the second dispensers 72 and 73 are provided for holding the respective sheets of wrapping material 71 from the corresponding second dispensers 72 and 73 prior to commencement of wrapping of the bale 2 with the wrapping material 71 from the second dispensers 72 and 73, and for severing the sheet material between the cut and hold mechanism and the wrapped bale on completion of wrapping of the wrapped bale with the wrapping sheet material 71 from the second dispensers 72 and 73. Such cut and hold mechanisms and their operation will be well known to those skilled in the art.

Returning now to the first dispenser 63, a main urging means provided by an idler roller 85 urges the wrapping material 64 extending between the first dispenser 63 and the bale 2 supported on the bale supporting rollers 54 and 55 downwardly on completion of wrapping of the bale 2 with the wrapping material 64 into engagement with the holding mechanism 69. The idler roller 85 is carried on a pair of pivot arms 86 which are pivotally coupled to the chassis 10 by pivot shafts 87. A pair of hydraulic rams 88 acting between the chassis 10 and the respective pivot arms 86 urge the idler roller 85 downwardly for urging the wrapping material 64 downwardly for engaging the holding mechanism 69 between the clamping plates 70 thereof.

A cutting means, comprising a cutting blade 89 slideable along a guide rail extending along one of the clamping plates 70 of the holding mechanism 69 and a co-operating anvil 90 also carried on the holding mechanism 69 severs wrapping material 64 from the first dispenser 63 between the holding mechanism 69 and a bale 2 on completion of wrapping of the bale 2 with the wrapping material 64.

The sub-assembly 50 is pivotal about the pivot shafts 51 in the direction of the arrow C by a pair of hydraulic rams (not shown) for tipping a wrapped bale 2 supported on the bale supporting rollers 54 and 55 to the ground on completion of wrapping. As the sub-assembly 50 is being tipped in the direction of the arrow C, the upstanding carrier members 59 are pivoted downwardly by a pair of by hydraulic rams (also not shown) in the direction of the arrow D about the pivot shafts 60 for facilitating lowering the bale towards the ground, and as the upstanding carrier members 59 are pivoted downwardly in the direction of the arrow D, the bale 2 is lowered so that it engages a lower support roller 92 which lowers the wrapped bale 2 onto the ground.

In use, the apparatus 1 is hitched to the back of a towing vehicle, typically, a tractor, and power is supplied to the apparatus 1 from a power take-off shaft of the tractor. The hydraulic system of the apparatus 1 may also be coupled to the hydraulic system of the tractor, although as mentioned above, the apparatus 1 may be provided with its own internal hydraulic power system which would be powered from the power take-off system of the tractor. The powering of such apparatus by the power take-off shaft of a tractor or by the hydraulic system of a tractor will be well known and understood by those skilled in the art.

With the segments 20, 21 and 22 of the baler 16 in the bale forming state, as the apparatus 1 is towed behind the tractor, the pick-up mechanism 48 picks up cut grass, hay, straw or other material which is to be baled, and transfers the cut grass or other material into the bale forming chamber 23. The bale forming rollers 27, 31 and 35 are rotated for forming the cut grass or other material into a bale in the bale forming chamber 23. On the bale 2 being formed in the bale forming chamber 23, , the upper segment 21 is pivoted upwardly in the direction of the arrow E into the discharge state by the first rams 44, and the lower segment 22 is then pivoted upwardly into the bale forming chamber 23 in the direction of the arrow G for tipping and transferring the bale 2 along the locus A from the bale forming chamber 23 onto the bale supporting rollers 54 and 55. As the bale 2 is being transferred from the bale forming chamber onto the bale supporting rollers 54 and 55 along the locus A, the bale 2 engages the wrapping material 64, which at this stage is extending between the first dispenser 63 and the holding mechanism 69 across the discharge opening 40, and further transfer of the bale onto the bale supporting rollers 54 and 55 causes the wrapping material 64 to be drawn from the first dispenser 63 for partly circumferentially wrapping the bale 2 around approximately 180° of the circumferential surface 5 of the bale 2.

Once the bale 2 has been transferred onto the bale supporting rollers 54 the lower segment 22 and the upper segment 21 are returned to the bale forming state and forming of the next bale 2 commences.

At this stage, the baler/bale wrapper 1 is operable in two operational modes for wrapping the bale 2. In the first operational mode, with the bale 2 stationary on the bale supporting rollers 54 and 55, and before, commencement of rotation of the bale 2 about the first wrapping axis 61 by the bale supporting rollers 54 and 55, the wrapping material 64 from the first dispenser 63 is secured onto the bale 2. This is carried out by rotating the carrier ring member 74 through one revolution for revolving the second dispensers 72 and 73 about the second wrapping axis 79, each through one revolution for wrapping the bale 2 with two turns of the wrapping material 71, one turn being provided from each second dispenser 72 and 73. Once the two turns of the wrapping material 71 have been wrapped onto the bale 2, the cut and hold mechanisms (not shown) associated with the respective second dispensers 72 and 73 are operated for severing the wrapping material 71 from the bale 2 between the bale 2 and the respective cut and hold mechanisms. The forward bale supporting roller 54 is rotated for rotating the bale 2 in the direction of the arrow H about the first wrapping axis 61 for circumferentially wrapping the circumferential surface 5 and the corner edges 8 of the bale 2 with the wrapping material 64 from the first dispenser 63. The bale 2 is rotated on the bale support rollers 54 and 55 about the first wrapping axis 61 until the desired number of circumferential turns of the wrapping material 64 from the first dispenser 63 has been wrapped around the circumferential surface 5 of the bale 2. In general, it is envisaged that the bale supporting rollers 54 and 55 will be rotated until three turns of the wrapping sheet 64 from the first dispenser 63 have been circumferentially wrapped around the circumferential surface 5 of the bale 2.

Once the desired number of circumferential turns of the wrapping material 64 from the first dispenser 63 have been wrapped around the circumference of the bale 2, the hydraulic rams 88 are activated for urging the idler roller 65 downwardly for urging the wrapping material 64 extending between the first dispenser 63 and the partially wrapped bale 2 downwardly between the clamping plates 70 of the holding mechanism 69. The clamping plates 70 are operated into the clamping state for clamping the wrapping material 64 therebetween. The cutting blade 89 is then operated for severing the wrapping material 64 between the holding mechanism 69 and the partially wrapped bale 2, and the holding mechanism 69 continues to hold the wrapping material 64, so that the wrapping material 64 is extended between the first dispenser 63 and the holding mechanism 69 ready for engaging the next bale 2 being transferred by the lower segment 22 through the discharge opening 40 of the baler 16 onto the bale supporting rollers 54 and 55.

The bale 2 is then again rotated about the first wrapping axis 61on the bale supporting rollers 54 and 55 and the carrier ring 74 is rotated for revolving the second dispensers 72 and 73 about the second wrapping axis 79, so that as the second dispensers 72 and 73 revolve around the rotating bale 2, sheets of wrapping material 71 are drawn from the respective second dispensers 72 and 73 and wrapped around the bale 2 with adjacent turns overlapping and extending axially from end to end of the bale 2. When sufficient wrapping material 71 from the second dispensers 72 and 73 has been wrapped onto the bale 2, rotation of the bale 2 on the bale supporting rollers 54 and 55 ceases and rotation of the carrier ring member 74 also ceases. The cut and hold mechanisms (not shown) associated with the second dispensers 72 and 73 sever the wrapping material 71 between the cut and hold mechanisms (not shown) and the wrapped bale 2. The wrapped bale 2 is then tipped onto the ground by pivoting the sub-assembly 50 in the direction of the arrow C and simultaneously pivoting the upstanding carrier member 59 in the direction of the arrow D.

In the second operational mode, operation of the baler/bale wrapper 1 for wrapping the bale 2 is substantially similar to its operation in the first operational mode, with the exception that as soon as the bale 1 has been transferred onto the bale supporting rollers 54 and 55, the bale supporting rollers 54 and 55 are operated for rotating the bale 2 thereon about the first wrapping axis 61, and simultaneously the carrier ring member 74 is rotated for revolving the second dispensers 72 and 73 about the second wrapping axis 79, so that the bale is simultaneously wrapped with wrapping material 64 from the first dispenser 63 and wrapping material 71 from the second dispensers 72 and 73, with the wrapping material 64 from the first dispenser 63 extending circumferentially around the bale in a general direction around the first wrapping axis 61, and the wrapping material 71 from the second dispensers 72 and 73 extending around the bale 2 in an axial end to end direction in a general direction around the second wrapping axis 79. Otherwise, operation of the baler/bale wrapper 1 in the second operational mode is similar to its operation in the first operational mode for wrapping the bale 2.

In both operational modes of the baler/bale wrapper 1, the rotational speed of the bale 2 about the first wrapping axis 61 by the bale supporting rollers 54 and 55, and the rotational speed of the carrier ring member 74 for revolving the second dispensers 72 and 73 about the second wrapping axis 79 are controllable and variable for altering the overlapping of adjacent turns of the wrapping material 71 from the second dispensers 72 and 73. Since in both operational modes of the baler/bale wrapper 1 the bale is circumferentially wrapped about its circumferential surface with the wrapping material 64 from the first dispenser 63, the amount of wrapping material 71 received from the second dispensers 72 and 73 is considerably reduced over bale wrappers known heretofore. Accordingly, the amount by which adjacent turns of the wrapping material 71 from the second dispensers 72 and 73 overlap can be significantly reduced. This is achieved by increasing the rotational speed of the bale 2 about the first wrapping axis 61 relative to the speed at which the second dispensers 72 and 73 are revolved about the second wrapping axis 79.

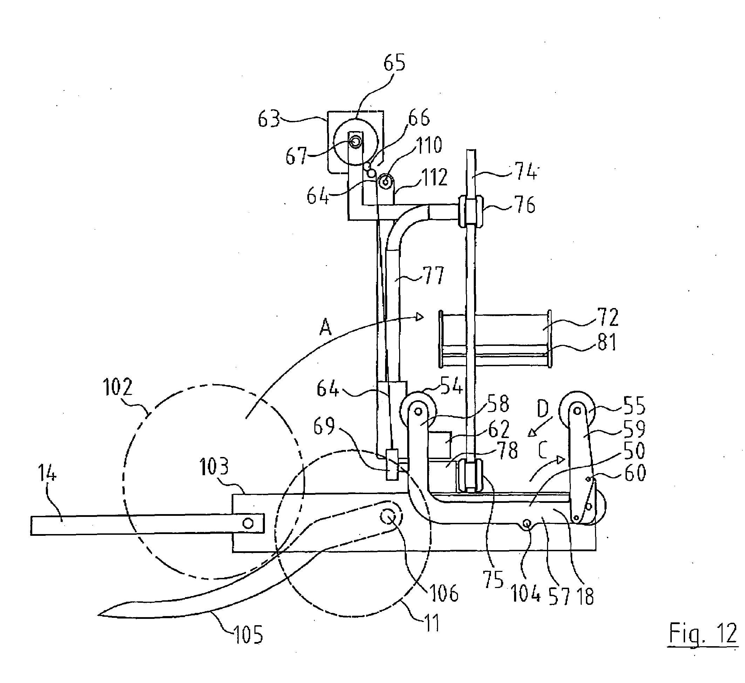

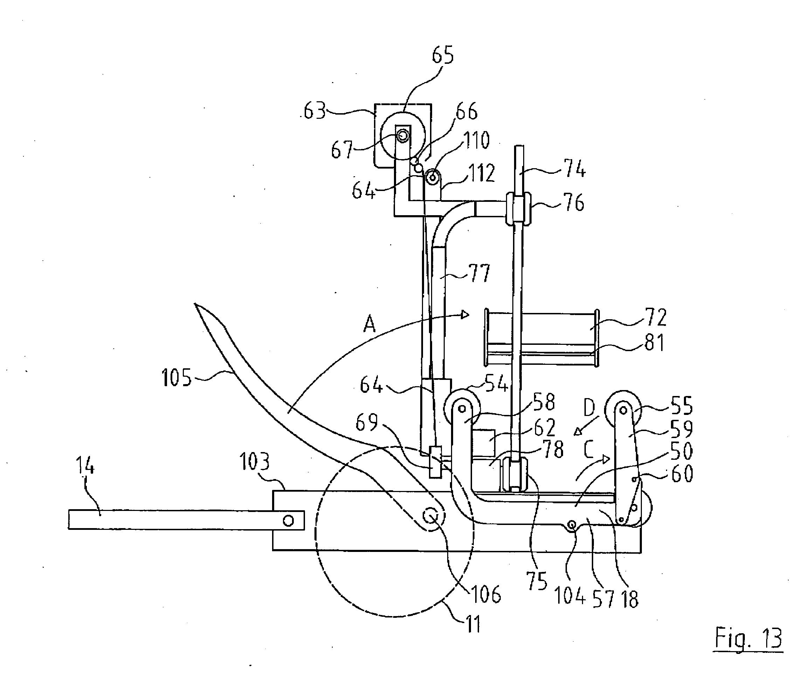

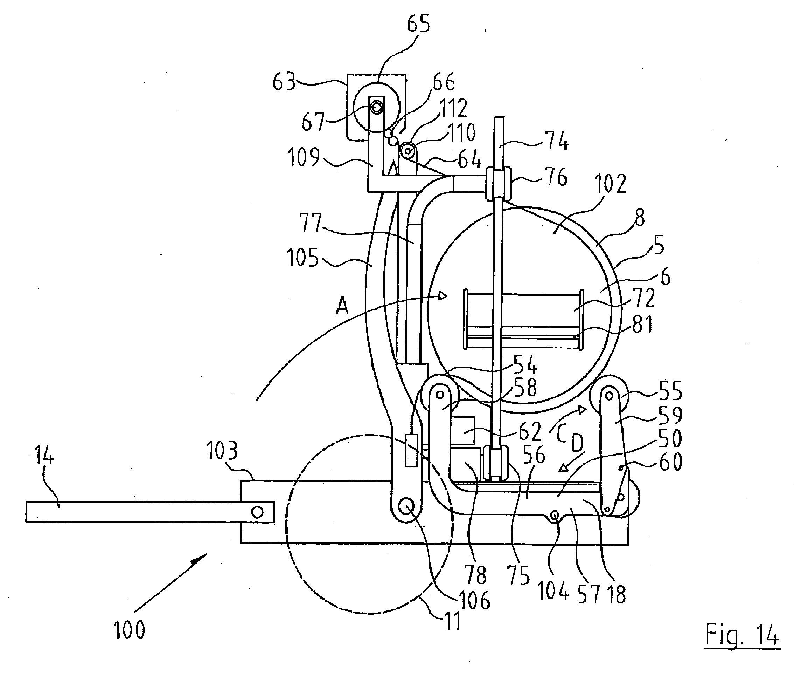

Referring now to Figs. 12 to 14 there is illustrated a bale wrapper also according to the invention indicated generally by the reference numeral 100 for wrapping a bale 102. The bale 102 is substantially similar to the bale 2, and typically, would be of hay, straw, silage or the like. The bale wrapper 100 is substantially similar to the portion of the baler/bale wrapper 1 on which the bale 2 is wrapped, and similar components are identified by the same reference numerals. In this embodiment of the invention, the sub-assembly 50 is pivotally mounted on a chassis 103 by a pair of aligned pivot shafts 104, which is similar to the mounting of the sub-assembly 50 to the chassis 10 of the baler/bale wrapper 1. However, in this embodiment of the invention a transfer means, namely, a transfer cradle 105 is pivotally coupled to the chassis 103 by a pivot shaft 106, and is pivotal from a pick-up position illustrated in Fig. 12 for picking a bale from the ground to a discharge position illustrated in Fig.14 for transferring the bale 102 through a locus of transfer A from the ground onto the bale supporting rollers 54 and 55 on which the bale 102 is supported during wrapping thereof.

In this embodiment of the invention, the first dispenser 63 is carried on mounting brackets 109 extending from the roller carriers 77. The main urging means for urging the wrapping material 64 from the first dispenser 63 downwardly to the holding mechanism 69 comprises an idler roller 110, which in this embodiment of the invention is urgeable along a pair of guide members 112 extending upwardly from the chassis 103 on respective opposite sides of the chassis 103 for urging the wrapping material 64 from the first dispenser 63 downwardly into engagement with the holding mechanism 69.

Otherwise, the bale wrapper 100 is substantially similar to the bale wrapper portion of the baler/bale wrapper 1.

In use, the baler is attached to a towing vehicle, for example, a tractor or the like and is powered by the hydraulic system or by the power take-off shaft of the tractor as already described with reference to the baler/bale wrapper 1. The bale wrapper 100 is adapted to be towed offset to one side of the tractor, so that as the bale wrapper 100 is drawn forwardly by the tractor with the transfer cradle 105 extending forwardly in the pick-up position adjacent the ground, the pick-up cradle 105 engages beneath a bale resting on a ground to be baled, with the central axis of the bale substantially parallel to the bale supporting rollers 54 and 55. With the bale on the transfer cradle 105, the transfer cradle 105 is pivoted from the pick-up position to the discharge position for transferring a bale through the locus of transfer A onto the bale supporting rollers 54 and 55. As the bale is being transferred through the locus of transfer A, the circumferential surface 5 of the bale 102 engages the wrapping material 64 extending between the first dispenser 63 and the holding mechanism 69, and as the bale 102 is being transferred onto the bale supporting rollers 54 and 55 wrapping material 64 is drawn from the first dispenser 63 to extend circumferentially partly around the circumferential surface 5 of the bale 102.

Thereafter, operation of the bale wrapper 100 is similar to the operation of the bale wrapper portion of the baler/bale wrapper 1. The bale wrapper 100 is operational in first and second operational modes, which are similar to the first and second operational modes already described with reference to the baler portion of the baler/bale wrapper 1. Once wrapping of the bale 102 has been completed, the bale is discharged from the sub-assembly in similar fashion as has been described with reference to the bale wrapping portion of the baler/bale wrapper 1.

In the embodiments of the invention described the baling apparatus 1 and the wrapper 100 are suitable for wrapping bales of diameter of the order of 1.25 metres, and of axial length of approximately 1.2 metres. To ensure that the corner edges 8 of the bales 2 and 102 are adequately wrapped, the wrapping material 64 dispensed from the first dispenser 63, as discussed above, is of transverse width of approximately 1.4 metres, in other words, the axial length of the roll 65 of the wrapping material 64 is of 1.4 metres, thereby allowing a 100mm overlap of the wrapping material 64 at the respective corner edges 8 of the bales 2 and 102, so that the wrapping material 64 extends approximately 100mm around the corner edges 8 of the bales 2 and 102. By appropriately setting the tension applied by the tensioning mechanism of the first dispenser 63, the central portion of the wrapping material 64 which circumferentially wraps the circumferential surface 5 of the bales 2 and 102 is sufficiently stretched so that the side edges of the wrapping material 64 extend radially relative to the bales 2 and 102 for approximately 100mm for engaging and abutting the axially opposite ends 6 of the bales 2 and 102 adjacent the corner edges 8.

Accordingly, since the circumferential surface 5 and the corner edges 8 are protected by the same number of turns of the wrapping material 64 from the first dispenser 63, the number of turns of the wrapping material 71 from the second dispensers 72 and 73 can be significantly reduced without reducing the number of layers of wrapping material protecting the circumferential surface 5 and the corner edges 8 of the bales 2 and 102. This, thus, reduces the number of layers of wrapping material extending across the respective opposite ends 6 of the bales 2 and 102, which has been excessive on bales wrapped by bale wrappers known heretofore. Accordingly, the apparatus 1 and the bale wrapper 100 significantly reduces the amount of wrapping film required for wrapping a bale.

While the baler/bale wrapper has been described as comprising a specific combination of baler and bale wrapper, it will be readily apparent to those skilled in the art that other suitable balers may be used. Additionally, it will be appreciated that while two second dispensers have been described as being carried on the carrier ring member of the bale wrapper and the bale wrapping portion of the baler/bale wrapper, any number of second dispensers may be carried on the carrier ring member, and indeed, in certain cases, a single second dispenser carried on the carrier ring member may be sufficient. Additionally, it will be readily apparent to those skilled in the art that other suitable arrangements and methods for revolving second dispensers around the second wrapping axis around the bale on the bale supporting rollers may be provided besides mounting the second dispensers on a carrier ring member which itself is rotatable. In certain cases, it is envisaged that the carrier ring member may be stationary, and the second dispenser or dispensers would be operable to move circumferentially around the carrier ring member.

While the first dispenser has been described as being mounted on the upper segment of the baler of the baler/bale wrapper, while this is advantageous, it is not essential. The first dispenser may be mounted in any other suitable location for facilitating the wrapping material therefrom being extended across the discharge opening of the baler and the locus of transfer of the bale so that the bale engages the wrapping material as the bale is being transferred from the baler to the bale supporting rollers.

While the baler of the baler/bale wrapper has been described as being a fixed chamber baler, the baler may be any other suitable type of baler, for example, a non-fixed chamber baler, such as, a baler in which the bale forming chamber is formed by conveying belts.

It will also be appreciated that where the bale wrapper is provided on its own, any other suitable mounting for the first dispenser besides that described may be provided. Indeed, in certain cases, it is envisaged that the first dispenser may be located at a level lower than the holding mechanism, and in which case, it is envisaged that the first dispenser would be located at a level below the level of the bale supporting rollers so that the first dispenser would be at a level below the locus of transfer of the bale onto the bale supporting rollers, and the holding mechanism would be located at a level above the locus of transfer, so that the wrapping material from the first dispenser would be stretched upwardly from the first dispenser across the locus of transfer of the bale, so that as the bale is being transferred onto the bale supporting rollers, the bale would engage the wrapping material from the first dispenser, which would be drawn from the first dispenser and partly wrapped around the circumference of the bale.

While the bale wrapper and the bale wrapper portion of the baler/bale wrapper have been described as being suitable for wrapping cylindrical bales, it is envisaged that the bale wrapper according to the invention may be adapted for wrapping bales of shape other than cylindrical bales, for example, parallel-piped bales, in which case, the bale support and the bale rotating means for rotating the bale about the first wrapping axis would be appropriately adapted to rotate a parallel-piped bale about a first wrapping axis, and the second dispenser or dispensers would be arranged as already described to revolve around the bale about the second wrapping axis.

Additionally, it is envisaged that the baler of the baler/bale wrapper may be adapted for forming bales other than cylindrical bales, for example, parallel-piped bales, and in this case, the wrapping portion of the baler/bale wrapper would be appropriately adapted.

Additionally, while the baler/bale wrapper has been described as being suitable for towing, it is envisaged in certain cases that the baler/bale wrapper may have its own inbuilt motive power and be independently driveable.

Additionally, while the bale support of the bale wrapper and the bale wrapping portion of the baler/bale wrapper have been described as being provided by a pair of parallel spaced-apart bale supporting rollers, any other suitable bale support may be provided. However, it is important that either the bale support should incorporate a bale rotating means for rotating the bale about the first wrapping axis, or alternatively, a separate bale rotating means for rotating the bale about the first wrapping axis is provided. While in the embodiments of the invention described, only one of the bale supporting rollers has been described as being driven, and the other bale supporting roller has been described as being an idler roller, in certain cases it is envisaged that both bale supporting rollers would be driven.

It is also envisaged that other suitable means for transferring a wrapped bale from the bale wrapper may be provided besides the transfer arrangement described.

It will also be appreciated that in the case of the bale wrapper, other suitable transfer means besides a transfer cradle for transferring a bale from the ground onto the bale wrapper may be provided, and indeed, it is envisaged that the bale wrapper may be adapted for mounting on a combined baler/bale wrapper, and the bale transfer means associated with the bale wrapper may be provided for transferring the bale onto the bale wrapper, and in which case it is envisaged that the bale would be discharged from the baler onto the transfer means of the bale wrapper.

Needless to say, other suitable discharge means for discharging a bale from the baler may be provided besides that described with reference to the baler/bale wrapper, and as mentioned above, the discharge means for discharging the bale from the baler may discharge the bale from the baler onto a transfer means associated with the bale wrapper.

## Claims

1. Baling apparatus for forming material into a cylindrical bale (2), the baling apparatus (1) comprising a baler (16), which defines a bale forming chamber (23) defining a longitudinally extending geometric main central axis (25), and within which the bale (2) is formed, the baler (16) comprising at least two segments (20,21,22), at least one (21) of which is moveable relative to the other (20,22) between a bale forming state whereby the segments (20,21,22) co-operate to form the bale forming chamber (23), and a discharge state with two of the segments (21,22) defining a discharge opening (40) from the bale forming chamber (23) for accommodating discharge of the bale (2) therefrom, a bale support (18,50,54,55) located adjacent the baler (16) for receiving a bale (2) discharged therefrom and for supporting the bale (2) during wrapping thereof, **characterised in that** a first dispenser (63) is located to one side of the discharge opening (40) for dispensing wrapping material (64) for circumferentially wrapping the bale (2), a holding means (69) is located to the opposite side of the discharge opening (40) to that on which the first dispenser (63) is located for gripping the wrapping material (64) extending from the first dispenser (63) with the wrapping material (64) extending across the discharge opening (40), so that when the bale (2) is discharged from the bale forming chamber (23) through the discharge opening (40) onto the bale support (18,50,54,55), the wrapping material (64) is engaged by the circumferential surface (5) of the bale (2), and is drawn from the first dispenser (63) onto the bale (2) to extend circumferentially partly around the circumferential surface (5) of the bale (2).

2. Baling apparatus as claimed in Claim 1 **characterised in that** the bale support (18,50,54,55) comprises a bale rotating means (54,55) for rotating a bale (2) supported thereon about a first wrapping axis (61) substantially coinciding with a geometrical central axis (3) of the bale (2), so that as the bale (2) is rotated by the bale rotating means (54,55), wrapping material (64) is drawn from the first dispenser (63) to wrap the bale (2) circumferentially around the circumferential surface (5) thereof.

3. Baling apparatus as claimed in Claim 2 **characterised in that** a second dispenser (72,73) is mounted for revolving about the bale support (18,50,54,55) for dispensing wrapping material (71) onto the bale (2), the second dispenser (72,73) being revolvable about a second wrapping axis (79) extending at an angle greater than zero to the first wrapping axis (61) for wrapping the bale (2) with the wrapping material (71) from the second dispenser (72,73) extending axially around the bale (2) end (6) to end (6) parallel to the geometric central axis (3) of the bale (2).

4. Bailing apparatus as claimed in Claim 3 **characterised in that** the second dispenser (72,73) is operable for dispensing at least one turn of the wrapping material (71) from the second dispenser (72,73) around the bale (2) with the wrapping material (64) from the first dispenser extending partly around the bale prior to rotation of the bale (2) by the bale rotating means (54,55) for retaining the wrapping material (64) from the first dispenser (63) on the circumferential surface (5) of the bale (2).

5. Baling apparatus as claimed in Claim 3 or 4 **characterised in that** the bale rotating means (54,55) is operable for rotating the bale (2) about the first wrapping axis (61) simultaneously as the second dispenser (72,73) is being revolved about the second wrapping axis (79) for simultaneously wrapping the bale (2) with wrapping material (64,71) from the first and second dispensers (63,72,73).

6. Baling apparatus as claimed in any of Claims 3 to 5 **characterised in that** the second wrapping axis (79) about which the second dispenser (72,73) is revolvable extends substantially perpendicularly to the first wrapping axis (61) about which the bale (2) is rotated by the bale rotating means (54,55), and intersects the first wrapping axis (61) about which the bale (2) is rotated by the bale rotating means (54,55) substantially midway between respective axially opposite ends (6) of the bale (2).

7. Baling apparatus as claimed in any of Claims 2 to 6 **characterised in that** the first wrapping axis (61) about which the bale rotating means (54,55) rotates the bale (2) extends parallel to the main central axis (25) defined by the bale forming chamber (23).

8. Baling apparatus as claimed in any preceding claim **characterised in that** the first dispenser (63) is located for holding a roll of wrapping material (64) with the longitudinally extending geometric central axis of the roll of wrapping material extending parallel to the main central axis (25) defined by the bale forming chamber (23).

9. Baling apparatus as claimed in any preceding claim **characterised in that** a main urging means (85,86,88) is provided for urging a portion of the wrapping material (64) extending between the first dispenser (63) and a bale (2) supported on the bale support (18) into engagement with the holding means (69).

10. Baling apparatus as claimed in any preceding claim **characterised in that** the first dispenser (63) is mounted on an upper one (21) of the segments (20,21,22) which defines the bale forming chamber (23).

11. A bale wrapper for wrapping a cylindrical bale (2,102) with wrapping material (64,71), the bale wrapper (18,100) comprising a bale support (18) for supporting the bale (2,102) during wrapping, a transfer means (22,105) for transferring a bale (2,102) to be wrapped along a locus (A) of transfer onto the bale support (18), **characterised in that** a first dispenser (63) is located for dispensing wrapping material (64) for circumferentially wrapping the bale (2,102), and a holding means (69) is spaced apart from the first dispenser (63) for holding the wrapping material (64) with the wrapping material (64) extending from the first dispenser (63) across the locus (A) of transfer, so that as the bale (2,102) is being transferred along the locus (A) of transfer onto the bale support (18), the wrapping material (64) is engaged by the circumferential surface (5) of the bale (2,102), and is drawn from the first dispenser (63) onto the bale (2,102) to extend circumferentially partly around the circumferential surface (5) of the bale (2,102).

12. A bale wrapper as claimed in Claim 11 **characterised in that** the bale support (18) comprises a bale rotating means (54,55) for rotating the bale (2,102) supported thereon about a first wrapping axis (61) substantially co-inciding with a geometric central axis (3) of the bale (2,102), so that as the bale (2,102) is rotated by the bale rotating means (54,55), wrapping material (64) is drawn from the first dispenser (63) to wrap the bale (2,102) circumferentially around the circumferential surface (5) thereof.

13. A bale wrapper as claimed in Claim 12 **characterised in that** a second dispenser (72,73) is provided for dispensing wrapping material (71) therefrom for wrapping the bale (2,102) supported on the bale support (18), the second dispenser (72,73) being revolvable about a second wrapping axis (79) extending at an angle greater than zero to the first wrapping axis (61), so that as the second dispenser (72,73) is being revolved about the second wrapping axis (79), wrapping material (71) is drawn from the second dispenser (72,73) and wrapped around the bale (2,102) in a general direction around the second wrapping axis (79).

14. A bale wrapper as claimed in Claim 13 **characterised in that** the second dispenser (72,73) is revolvable about the second wrapping axis (79) simultaneously as the bale rotating means (54,55) rotates the bale about the first wrapping axis (61) for wrapping the bale (2,102) with the wrapping material (64) from the second dispenser (72,73) with the wrapping material (71) extending in the general direction around the second wrapping axis (79).

15. A bale wrapper as claimed in Claim 13 or 14 **characterised in that** the first and second dispensers (63,72,73) are arranged relative to each other so that wrapping material (64) is drawn from the first dispenser (63) simultaneously as wrapping material (71) is drawn from the second dispenser (72,73) when the bale rotating means (54,55) rotates the bale (2,102) about the first wrapping axis (61) simultaneously as the second dispenser (72,73) is being revolved about the second wrapping axis (79) for simultaneously wrapping the bale (2,102) with wrapping material (64) from the first dispenser (63) extending circumferentially around the bale (2,102) in the general direction around the first wrapping axis (61) and for wrapping the bale with wrapping material (71) from the second dispenser (72,73) extending in the general direction around the second wrapping axis (79).

16. A bale wrapper for wrapping a bale (2,102) with wrapping material (64,71). the bale wrapper comprising a bale support (18) for supporting the bale (2,102) during wrapping, a transfer means (22,105) for transferring a bale (2,102) to be wrapped along a locus (A) of transfer onto the bale support (18), **characterised in that** a first dispenser (63) is located for dispensing wrapping material (64) for wrapping the bale (2,102), and a holding means (69) is spaced apart from the first dispenser (63) for holding the wrapping material (64) with the wrapping material (64) extending from the first dispenser (63) and extending across the locus (A) of transfer, so that as the bale (2,102) is being transferred along the locus (A) of transfer onto the bale support (18), the wrapping material (64) is engaged by the bale (2,102), and is drawn from the first dispenser (63) onto the bale (2,102) so that when the bale (2,102) is transferred onto the bale support (18) the wrapping material (64) extends partly around the bale (2,102) in a general direction around a first wrapping axis (61), and a bale rotating means (54, 55) rotates the bale (2,102) supported on the bale support (18) about the first wrapping axis (61) for drawing wrapping material (64) from the first dispenser (63) to wrap the bale (2,102) with the wrapping material (64) extending around the bale (2,102) in the general direction around the first wrapping axis (61).

17. A bale wrapper as claimed in Claim 16 **characterised in that** a second dispenser (72,73) is provided for dispensing wrapping material (71) therefrom for wrapping the bale (2,102) supported on the bale support (18), the second dispenser (72,73) being revolvable about a second wrapping axis (79) extending at an angle greater than zero to the first wrapping axis (61) and being arranged so that as the second dispenser (72,73) is being revolved about the second wrapping axis (79) wrapping material (71) is drawn from the second dispenser (72,73) and is wrapped around the bale (2,102) in a general direction around the second wrapping axis (79).

18. A bale wrapper as claimed in Claim 17 **characterised in that** the second dispenser (72,73) is revolvable about the second wrapping axis (79) simultaneously as the bale rotating means (54,55) rotates the bale (2,102) about the first wrapping axis (61) for wrapping the bale (2,102) with the wrapping material (71) from the second dispenser (72,73) with the wrapping material (71) extending in the general direction around the second wrapping axis (79), and each turn of the wrapping material (71) from the second dispenser (72,73) overlapping an adjacent immediately preceding turn.

19. A method for forming and wrapping a cylindrical bale of material, the method comprising forming the bale (2) in a baler (16), transferring the bale (2) from the baler (16) through a discharge opening (40) in the baler (16) to a bale support (18,50,54,55) adjacent the baler (16) on which the bale (2) is supported during wrapping, extending a sheet of wrapping material (64) from a first dispenser (63) across the discharge opening (40) of the baler (16), so that as the bale (2) is transferred from the baler (16) to the bale support (18), a portion of a circumferential surface (5) of the bale (2) is circumferentially wrapped with the wrapping material (64) from the first dispenser (63).

20. A method as claimed in Claim 19 **characterised in that** the method further comprises rotating the bale (2) on the bale support (18) about a first wrapping axis (61) substantially coinciding with a geometric longitudinally extending central axis (3) of the bale (2) for drawing wrapping material (64) from the first dispenser (63) to wrap the circumferential surface (5) of the bale (2) circumferentially with the wrapping material (64).

21. A method as claimed in Claim 20 **characterised in that** the bale (2) is wrapped with wrapping material (71) drawn from a second dispenser (72,73) as the second dispenser (72,73) is revolved around the bale support (18) about a second wrapping axis (79) which extends at an angle greater than zero degrees to the first wrapping axis (61) about which the bale (2) is rotated on the bale support (18).

22. A method as claimed in Claim 21 **characterised in that** the bale (2) is rotated about the first wrapping axis (61) simultaneously while the second dispenser (72,73) is being revolved about the second wrapping axis (72) for simultaneously wrapping of the bale (2) with wrapping material (64,71) from the first and second dispensers (63,72,73).

23. A method as claimed in any of Claims 19 to 22 **characterised in that** the wrapping material (64) of the first dispenser (63) is of transverse width greater than the axial length of the bale (2), and the wrapping material (64) is drawn from the first dispenser (63) so that portions of the wrapping material (64) adjacent respective opposite side edges (64a) thereof embrace the bale (2) to engage respective axially opposite ends (6) thereof.

24. A method for wrapping a cylindrical bale (2,102) of material, the method comprising transferring the bale (2,102) along a locus (A) of transfer onto a bale support (18,50,54,55), extending a sheet of wrapping material (64) from a first dispenser (63) across the locus (A) of transfer so that as the bale (2,102) is transferred along the locus (A) of transfer onto the bale support (18), the wrapping material (64) is engaged by the circumferential surface (5) of the bale (2,102) and is drawn from the first dispenser (63) onto the bale (2,102) to extend circumferentially around the circumferential surface (5) of the bale (2,102).

25. A method as claimed in Claim 24 in which the method further comprises rotating the bale (2,102) on the bale support (18) about a first wrapping axis (61) substantially coinciding with a geometric longitudinally extending central axis (3) of the bale (2,102) for drawing wrapping material (64) from the first dispenser (63) to wrap the circumferential surface (5) of the bale (2,102) circumferentially with the wrapping material (64).

26. A method as claimed in Claim 25 in which the bale (2,102) is wrapped with wrapping material (71) drawn from a second dispenser (72,73) as the second dispenser (72,73) is revolved around the bale support (18) about a second wrapping axis (79) which extends at an angle greater than zero degrees to the first wrapping axis (61) about which the bale (2,102) is rotated on the bale support (18).

27. A method as claimed in Claim 26 **characterised in that** the bale (2,102) is rotated about the first wrapping axis (61) simultaneously while the second dispenser (72,73) is being revolved about the second wrapping axis (79) for simultaneously wrapping of the bale (2,102) with wrapping material (64,71) from the first and second dispensers (63,72,73).

28. A method for wrapping a bale (2,102) with wrapping material (64,71), the method comprising transferring the bale (2,102) to be wrapping along a locus (A) of transfer onto a bale support (18,50,54,55), extending wrapping material (64) from a first dispenser (63) to a holding means (69) across the locus (A) of transfer so that as the bale (2,102) is being transferred along the locus (A) of transfer onto the bale support (18) the wrapping material (64) is engaged by the bale (2,102) and is drawn from the first dispenser (63) onto the bale (2,102) to extend partly around the bale (2,102) in a general direction around a first wrapping axis (61), and rotating the bale (2,102) on the bale support (18) about the first wrapping axis (61) for drawing wrapping material (64) from the first dispenser (63) to wrap the bale (2,102) with the wrapping material (64) extending around the bale (2,102) in the general direction around the first wrapping axis (61).

29. A method as claimed in Claim 28 **characterised in that** a second dispenser (72,73) is revolved about a second wrapping axis (79) extending at an angle greater than zero to the first wrapping axis (61) for wrapping the bale (2,102) supported on the bale support (18) with wrapping material (71) from the second dispenser (72,73), so that as the second dispenser (72,73) is revolved about the second wrapping axis (79), wrapping material (71) is drawn from the second dispenser (72,73) and is wrapped around the bale (2,102) in a general direction around the second wrapping axis (79).

## Patentansprüche

1. Ballenformvorrichtung zum Formen eines Materials in einen zylindrischen Ballen (2), wobei die Ballenformvorrichtung (1) aufweist:
- eine eine Ballenformkammer (23) festlegende Ballenpresse (16), wobei in der Ballenformkammer (23) der Ballen (2) geformt wird und die Ballenformkammer (23) eine sich in Längsrichtung erstreckende geometrische Hauptmittelachse (25) definiert, wobei die Ballenpresse (16) wenigstens zwei Elemente (20, 21, 22) umfasst, von denen wenigstens eines (21) relativ zu den anderen (20, 22) zwischen einem Ballenformzustand, in dem die Elemente (20, 21, 22) zum Formen der Ballenformkammer (23) zusammenwirken, und einem Auswurfzustand verlagerbar ist, in dem zwei Elemente (21, 22) eine Auswurföffnung (40) der Ballenformkammer (23) zum Auswerfen des Ballens (2) bilden,
- eine Ballenaufnahme (18, 50, 54, 55), die benachbart zu der Ballenpresse (16) zum Aufnehmen eines ausgeworfenen Ballens und zum Halten des Ballens (2) während des Wickelns angeordnet ist,
**dadurch gekennzeichnet, dass** eine erste Abrollvorrichtung (63) an einer Seite der Auswurföffnung (40) zum Abrollen von Wickelmaterials (64) angeordnet ist, welches zum Wickeln des Ballens (2) in Umfangsrichtung vorgesehen ist, und dass
- ein Haltemittel an der Seite der Auswurföffnung (40) zum Greifen des Wickelmaterials (64) angeordnet ist, die der Seite, an der die erste Abrollvorrichtung (63) angeordnet ist, gegenüberliegt, wobei sich das Wickelmaterial (64) ausgehend von der ersten Abrollvorrichtung (63) über die Auswurföffnung (40) erstreckt, sodass dann, wenn der Ballen (2) aus der Ballenformkammer (23) durch die Auswurföffnung (40) auf die Ballenaufnahme (18, 50, 54, 55) ausgeworfen wird, das Wickelmaterial (64) von der Umfangsfläche (5) des Ballens (2) mitgenommen und von der ersten Abrollvorrichtung (63) auf den Ballen (2) gezogen wird, um sich teilweise in Umfangsrichtung um die Umfangsfläche (5) des Ballens (2) zu erstrecken.

2. Ballenformvorrichtung nach Anspruch 1, **dadurch gekennzeichnet, dass** die Ballenaufnahme (18, 50, 54, 55) ein Ballendrehmittel (54, 55) zum Drehen eines darauf aufgenommenen Ballens (2) um eine erste Wickelachse (61) aufweist, die im Wesentlichen mit der geometrischen Mittelachse (3) des Ballens (2) übereinstimmt, sodass der Ballen (2) durch das Ballendrehmittel (54, 55) gedreht und Wickelmaterial (64) von der ersten Abrollvorrichtung (63) gezogen wird, um damit den Ballen (2) in Umfangsrichtung um die Umfangsfläche (5) zu wickeln.

3. Ballenformvorrichtung nach Anspruch 2, **dadurch gekennzeichnet, dass** eine zweite um die Ballenaufnahme (18, 50, 54, 55) herum drehbare Abrollvorrichtung (72, 73) angeordnet ist, die Wickelmaterial (71) auf den Ballen (2) abgibt, wobei die zweite Abrollvorrichtung (72, 73) um eine zweite Wickelachse (79) drehbar ist, welche sich in einem Winkel größer als Null zur ersten Wickelachse (61) erstreckt, um den Ballen (2) mit Wickelmaterial (71) von der zweiten Abrollvorrichtung (72, 73) zu wickeln, die sich axial um den Ballen (2) von einem Ende zum anderen Ende parallel zur geometrischen Mittelachse (3) des Ballens (2) erstreckt.

4. Ballenformvorrichtung nach Anspruch 3, **dadurch gekennzeichnet, dass** die zweite Abrollvorrichtung (72, 73) zum Abrollen wenigstens eine Wicklung von Wickelmaterial (71) von der zweiten Abrollvorrichtung (72, 73) um den Ballen (2) betätigbar ist, wobei sich das Wickelmaterial (64) von der ersten Abrollvorrichtung vor der Drehung des Ballens (2) durch das Ballendrehmittel (54, 55) teilweise um den Ballen (2) erstreckt, um das Wickelmaterial (64) von der ersten Abrollvorrichtung (63) an der Umfangsfläche (5) des Ballens (2) anzubringen.

5. Ballenformvorrichtung nach einem der Ansprüche 3 oder 4, **dadurch gekennzeichnet, dass** das Ballendrehmittel (54, 55) betätigbar ist, um den Ballen (2) um die erste Wickelachse (61) gleichzeitig mit der Drehung der zweiten Abrollvorrichtung (72, 73) um die zweite Wickelachse (79) zum gleichzeitigen Wickeln des Ballens (2) mit Wickelmaterial (64, 71) von der ersten und der zweiten Abrollvorrichtung (63, 72, 73) zu drehen.

6. Ballenformvorrichtung nach einem der Ansprüche 3 bis 5, **dadurch gekennzeichnet, dass** die zweite Wickelachse (79), um die die zweite Abrollvorrichtung (72, 73) drehbar ist, sich im Wesentlichen senkrecht zur ersten Wickelachse (61) erstreckt und die erste Wickelachse (61) im Wesentlichen mittig zwischen den beiden axialen gegenüberliegenden Enden (6) des Ballens (2) schneidet, wobei der Ballen um die erste Wickelachse (61) durch das Ballendrehmittel (54, 55) drehbar ist.

7. Ballenformvorrichtung nach einem der Ansprüche 2 bis 6, **dadurch gekennzeichnet, dass** die erste Wickelachse (61), um die das Ballendrehmittel (54, 55) den Ballen (2) dreht, sich parallel zur Hauptmittelachse (25) erstreckt, die durch die Ballenformkammer (23) definiert wird.

8. Ballenformvorrichtung nach einem der vorangehenden Ansprüche, **dadurch gekennzeichnet, dass** die erste Abrollvorrichtung (63) angeordnet ist, um eine Rolle von Wickelmaterial (64) zu halten, deren sich in Längsrichtung erstreckende geometrische Mittelachse sich parallel zur Hauptmittelachse (25) erstreckt, welche durch die Ballenformkammer (23) festgelegt wird.

9. Ballenformvorrichtung nach einem der vorangehenden Ansprüchen, **dadurch gekennzeichnet, dass** ein Hauptantriebsmittel (85, 86, 88) einen Abschnitt des Wickelmaterials (64) zum in Eingriffbringen des Wickelmaterials mit dem Haltemittel (69) antreibt, wobei sich das Wickelmaterial zwischen der ersten Abrollvorrichtung (63) und einem von der Ballenaufnahme (18) gehaltenen Ballen (2) erstreckt.

10. Ballenformvorrichtung nach einem der vorangehenden Ansprüchen, **dadurch gekennzeichnet, dass** die erste Abrollvorrichtung (63) an einem der Oberen (21) der Elemente (21, 22) angeordnet ist, die die Ballenformkammer (23) festlegen.

11. Ballenwickelvorrichtung zum Wickeln eines zylindrischen Ballens (2, 102) mit Wickelmaterial (64, 71), wobei der Ballenwickelvorrichtung (18, 100) aufweist:
- eine Ballenaufnahme (18) zum Halten des Ballens (2, 102) während des Wickelns,
- ein Verlagermittel (22, 105) zum Verlagern eines zu wickelnden Ballens (2, 102) entlang einer Verlagerungsortskurve (A) auf der Ballenaufnahme (18),
**dadurch gekennzeichnet, dass** eine erste Abrollvorrichtung (63) zum Abgeben von Wickelmaterials (64) für das Wickeln des Ballens (2, 102) in Umfangsrichtung angeordnet und ein Haltemittel zum Halten des Wickelmaterials (64) von der ersten Abrollvorrichtung (63) beabstandet ist, wobei sich das Wickelmaterial (64) von der ersten Abrollvorrichtung (63) über die Verlagerungsortskurve (4) erstreckt, sodass der Ballen (2, 102) entlang der Verlagerungsortskurve (4) auf der Ballenaufnahme (18) verlagert wird, wobei das Wickelmaterial (64) von der Umfangsfläche (5) des Ballens (2, 102) mitgenommen und von der ersten Abrollvorrichtung (63) auf den Ballen (2, 102) gezogen wird, um sich In Umfangsrichtung teilweise um die Umfangsfläche (5) des Ballens (2, 102) zu erstrecken.

12. Ballenwickelvorrichtung nach Anspruch 11, **dadurch gekennzeichnet, dass** die Ballenaufnahme (18) ein Ballendrehmittel (54, 55) zum Drehen des darauf gehaltenen Ballens (2, 102) um eine erste Wickelachse (61) aufweist, die im Wesentlichen mit einer geometrischen Mittelachse (3) des Ballens (2, 102) übereinstimmt, sodass der Ballen (2, 102) durch das Ballendrehmittel (54, 55) drehbar ist und das Wickelmaterial (64) von der ersten Abrollvorrichtung (63) gezogen wird, um den Ballen (2, 102) in Umfangsrichtung um die Umfangsfläche (5) zu wickeln.

13. Ballenwickelvorrichtung nach Anspruch 12, **dadurch gekennzeichnet, dass** eine zweite Abrollvorrichtung (72, 73) zum Abrollen des Wickelmaterials (71) für das Wickeln des Ballens (2, 102) vorgesehen ist, der auf der Ballenaufnahme (18) gehalten wird, wobei die zweite Abrollvorrichtung (72, 73) drehbar um eine zweite Wickelachse (79) ist, die sich in einem Winkel größer als Null Grad zu der ersten Wickelachse (61) erstreckt, sodass die zweite Abrollvorrichtung (72, 73) um die zweite Wickelachse (79) drehbar ist, wobei das Wickelmaterial (71) von der zweiten Abrollvorrichtung (72, 73) gezogen und um den Ballen (2, 102) im Wesentlichen in einer Richtung um die zweite Wickelachse (79) gewickelt wird.

14. Ballenwickelvorrichtung nach Anspruch 13, **dadurch gekennzeichnet, dass** die zweite Abrollvorrichtung (72, 73) um die zweite Wickelachse (79) gleichzeitig mit einer Drehung des Ballens durch das Ballendrehmittel (54, 55) um die erste Wickelachse (71) drehbar ist, um den Ballen (2, 102) mit Wickelmaterial (64) von der zweiten Abrollvorrichtung (72, 73) zu wickeln, wobei sich das Wickelmaterial (71) im Wesentlichen in Richtung der zweiten Wickelachse (79) erstreckt.

15. Ballenwickelvorrichtung nach Anspruch 13 oder 14, **dadurch gekennzeichnet, dass** die erste und zweite Abrollvorrichtung (63, 72, 73) derart relativ zueinander angeordnet sind, dass gleichzeitig Wickelmaterial (64) von der ersten Abrollvorrichtung (63) und Wickelmaterial (71) von der zweiten Abrollvorrichtung (72, 73) gezogen wird, falls das Ballendrehmittel (54, 55) den Ballen (2, 102) um die erste Wickelachse (61) gleichzeitig mit einer Drehung der zweiten Abrollvorrichtung (72, 73) um die zweite Wickelachse (79) dreht, um den Ballen (2, 102) gleichzeitig mit Wickelmaterial (64) von der ersten Abrollvorrichtung (63), das sich in Umfangsrichtung um den Ballen (2, 102) im Wesentlichen in Richtung der ersten Wickelachse (61) erstreckt, und mit Wickelmaterial (71) von der zweiten Abrollvorrichtung (72, 73) zu wickeln, das sich im Wesentlichen um die zweite Wickelachse (79) erstreckt.

16. Ballenwickelvorrichtung zum Wickeln eines Ballens (2, 102) mit Wickelmaterial (64, 71), wobei die Ballenwickelvorrichtung aufweist:
- eine Ballenaufnahme (18) zum Halten des Ballens (2, 102) während des Wickelns, -
- ein Verlagermittel (22, 105) zum Verlagern eines zu wickelnden Ballens (2, 102) entlang einer Verlagerungsortskurve (A) auf der Ballenaufnahme (18),
**dadurch gekennzeichnet, dass** eine erste Abrollvorrichtung (63) zum Abgeben von Wickelmaterial (64) zum Wickeln des Ballens (2, 102) angeordnet ist und
ein Haltemittel (69) beabstandet von dem ersten Abroller (63) zum Halten des Wickelmaterials (64) vorgesehen ist, wobei sich das Wickelmaterial (64) von der ersten Abrollvorrichtung (63) ausgehend erstreckt und entlang der Verlagerungsortskurve verläuft, sodass der Ballen (2, 102) entlang der Verlagerungsortskurve (A) der auf der Ballenaufnahme (18) verlagert wird, das Wickelmaterial (64) von dem Ballen (2, 102) mitgenommen und von der ersten Abrollvorrichtung (63) auf dem Ballen (2, 102) gezogen wird, sodass, wenn der Ballen (2, 102) auf der Ballenaufnahme (18) verlagert wird, sich das Wickelmaterial (64) teilweise um den Ballen (2, 102) im Wesentlichen in Richtung um die erste Wickelachse (61) erstreckt, und ein Ballendrehmittel (54, 55) den auf der Ballenaufnahme (18) aufgenommenen Ballen (2, 102) um die erste Wickelachse (61) zum Abziehen des Wickelmaterials (64) von der ersten Abrollvorrichtung (63) dreht, um den Ballen (2, 102) mit Wickelmaterial (64) zu wickeln, das sich um den Ballen (2, 102) im Wesentlichen in einer Richtung um die Wickelachse (61) erstreckt.

17. Ballenwickelvorrichtung nach Anspruch 16, **dadurch gekennzeichnet, dass** eine zweite Abrollvorrichtung (72, 73) zum Abgeben von Wickelmaterial (71) zum Wickeln des Ballens (2, 102) vorgesehen ist, der von der Ballenaufnahme (18) gehalten wird, wobei die zweite Abrollvorrichtung (72, 73) drehbar um eine zweite Wickelachse (79) ist, die sich im Wesentlichen mit einem Winkel größer als Null zu der ersten Wickelachse (61) erstreckt und derart angeordnet ist, dass, wenn die zweite Abrollvorrichtung (72, 73) sich um die zweite Wickelachse (79) dreht, Wickelmaterial (71) von der zweiten Abrollvorrichtung (72, 73) gezogen und um den Ballen (2, 102) im Wesentlichen in einer Richtung um die zweite Wickelachse (79) gewickelt wird.

18. Ballenwickelvorrichtung nach Anspruch 17, **dadurch gekennzeichnet, dass** die zweite Abrollvorrichtung (72, 73) um die zweite Wickelachse (79) gleichzeitig mit dem Drehen des Ballens (2, 102) um die erste Wickelachse (71) durch das Ballendrehmittel (54, 55) zum Wickeln des Ballens (2, 102) mit dem Wickelmaterial (71) von der zweiten Abrollvorrichtung (72, 73) drehbar ist, wobei sich das Wickelmaterial (71) im Wesentlichen in einer Richtung um die zweite Wickelachse (79) erstreckt und jede Lage des Wickelmaterials (71) von der zweiten Abrollvorrichtung (72, 73) eine unmittelbar vorherige Wickelung überlappt.

19. Verfahren zum Formen und Wickeln eines zylindrischen Materialballens, wobei das Verfahren umfasst: Formen des Ballens (2) in einer Ballenpresse (16), Verlagern des Ballens (2) von der Ballenpresse (16) durch eine Auswurföffnung (40) in der Ballenpresse (16) zu einer der Ballenpresse (16) benachbarten Ballenaufnahme (18, 50, 54, 55), auf der der Ballen (2) während des Wickelns gehalten wird, wobei sich eine Lage von Wickelmaterial (64) von einer ersten Abrollvorrichtung (63) über die Auswurföffnung (40) der Ballenpresse (16) derart erstreckt, dass, wenn der Ballen (2) von der Ballenpresse (16) zu der Ballenaufnahme (18) verlagert wird, ein Abschnitt einer Umfangsfläche (5) des Ballens (2) in Umfangsrichtung mit Wickelmaterial (64) von der ersten Abrollvorrichtung (63) gewickelt wird.

20. Verfahren nach Anspruch 19, **dadurch gekennzeichnet, dass** das Verfahren ferner aufweist: Drehen des Ballens (2) in der Ballenaufnahme (18) um eine erste Wickelachse (61), die im Wesentlichen mit einer sich in Längsrichtung erstreckenden geometrischen Mittelachse (3) des Ballens (2) übereinstimmt, Ziehen des Wickelmaterials (64) von der ersten Abrollvorrichtung (63), um die Umfangsfläche (5) des Ballens (2) in Umfangsrichtung mit Wickelmaterial (64) zu wickeln.

21. Verfahren nach Anspruch 20, **dadurch gekennzeichnet, dass** der Ballen (2) mit Wickelmaterial gewickelt wird, welches von einer zweiten Abrollvorrichtung (72, 73) gezogen wird, wenn die zweite Abrollvorrichtung (72, 73) um die Ballenaufnahme (18) um eine zweite Wickelachse (79) gedreht wird, die sich in einem Winkel größer als Null Grad zu der ersten Wickelachse (61) erstreckt, um die der Ballen (2) auf der Ballenaufnahme (18) gedreht wird.

22. Verfahren nach Anspruch 21, **dadurch gekennzeichnet, dass** der Ballen (2) um die erste Wickelachse (61) gleichzeitig gedreht wird, während die zweite Abrollvorrichtung (72, 73) um die zweite Wickelachse (72) gedreht wird, um den Ballen (2) gleichzeitig mit Wickelmaterial (64, 71) von der ersten und der zweiten Abrollvorrichtung (63, 72, 73) zu wickeln.

23. Verfahren nach einem der Ansprüche 19 bis 22, **dadurch gekennzeichnet, dass** das Wickelmaterial von der ersten Abrollvorrichtung (61) eine Quererstreckung aufweist, die größer als die axiale Länge des Ballens (2) ist und das Wickelmaterial (64) von der ersten Abrollvorrichtung (63) derart abgezogen wird, dass Abschnitte des Wickelmaterials (64), die sich an gegenüberliegende Seitenkanten (64a) des Wickelmaterials (64) anschließen, den Ballen (2) umgeben, um sich an entsprechende axiale Enden (6) des Ballens anzulegen.

24. Verfahren zum Wickeln eines zylindrischen Materialballens (2, 102), wobei das Verfahren umfasst: Verlagern des Ballens (2, 102) entlang einer Verlagerungsortskurve (A) auf der Ballenaufnahme (18, 50, 54, 55), wobei sich eine Lage von Wickelmaterial (64) von einer ersten Abrollvorrichtung (63) entlang der Verlagerungsortskurve (A) derart erstreckt, dass dann, wenn der Ballen (2, 102) entlang der Verlagerungsortskurve (A) auf der Ballenaufnahme (18) verlagert wird, das Wickelmaterial (64) von der Umfangsfläche (5) des Ballens (2, 102) mitgenommen und von der ersten Abrollvorrichtung (63) auf den Ballen (2, 102) gezogen wird, um sich in Umfangsrichtung um die Umfangsfläche (5) des Ballens (2, 102) zu erstrecken.

25. Verfahren nach Anspruch 24, wobei das Verfahren ferner aufweist: Drehen des Ballens (2, 102) auf der Ballenaufnahme (18) um eine erste Wickelachse (61), die im Wesentlichen mit einer sich in Längsrichtung erstreckenden, geometrischen Mittelachse (3) des Ballens (2, 102) übereinstimmt, Abziehen von Wickelmaterial (64) von der ersten Abrollvorrichtung (63), um die Umfangsfläche (5) des Ballens in Umfangsrichtung mit Wickelmaterial (64) zu wickeln.

26. Verfahren nach Anspruch 25, in dem der Ballen (2, 102) mit von einer zweiten Abrollvorrichtung (72, 73) abgezogenen Wickelmaterial (71) gewickelt wird, wenn die zweite Abrollvorrichtung (72, 73) um die Ballenaufnahme und um eine zweite Wickelachse (79) gedreht wird, die sich in einem Winkel größer als Null Grad zu der ersten Wickelachse (61) erstreckt, um die der Ballen (2, 102) auf der Ballenaufnahme (18) gedreht wird.

27. Verfahren nach Anspruch 26, **dadurch gekennzeichnet, dass** der Ballen (2, 102) um die erste Wickelachse (61) gleichzeitig gedreht wird, wenn die zweite Abrollvorrichtung (72, 73) um die zweite Wickelachse (79) gedreht wird, um den Ballen (2, 102) gleichzeitig mit Wickelmaterial (64, 71) von der ersten und der zweiten Abrollvorrichtung (63, 72, 73) zuwickeln.

28. Verfahren zum Wickeln eines Ballens (2, 102) mit Wickelmaterial (64, 71), wobei das Verfahren aufweist: Verlagern des zu wickelnden Ballens (2, 102) entlang einer Verlagerungsortskurve (A) auf der Ballenaufnahme (18, 50, 54, 55), wobei sich das Wickelmaterial (64) von der ersten Abrollvorrichtung (63) zu einem Haltemittel (69) über die Verlagerungstskurve (A) derart erstreckt, dass, wenn der Ballen (2, 102) entlang der Verlagerungsortskurve (A) auf der Ballenaufnahme (18) verlagert wird, das Wickelmaterial (64) durch den Ballen (2, 102) mitgenommen und von der ersten Abrollvorrichtung (63) auf den Ballen (2, 102) gezogen wird, um sich teilweise um den Ballen (2, 102) im Wesentlichen in einer Richtung um die erste Wickelachse (61) zu erstrecken, und Drehen des Ballens (2, 102) auf der Ballenaufnahme (18) um die erste Wickelachse (61) zum Abziehen des Wickelmaterials (64) von der ersten Abrollvorrichtung (63), um den Ballen (2, 102) mit dem Wickelmaterial (64) zu wickeln, das sich um den Ballen (2, 102) im Wesentlichen in einer Richtung um die erste Wickelachse (61) erstreckt.

29. Verfahren nach Anspruch 28, **dadurch gekennzeichnet, dass** eine zweite Abrollvorrichtung (72, 73) um eine zweite Wickelachse (79) gedreht wird, die sich in einem Winkel größer als Null Grad zu der ersten Wickelachse (61) erstreckt, um den auf der Ballenaufnahme (18) gehaltenen Ballen (2, 102) mit Wickelmaterial (71) von der zweiten Abrollvorrichtung (72, 73) zu wickeln, sodass dann, wenn die zweite Abrollvorrichtung (72, 73) um die zweite Wickelachse (79) gedreht wird, das Wickelmaterial (71) von der zweiten Abrollvorrichtung (72, 73) gezogen und um den Ballen (2, 102) im Wesentlichen in einer Richtung um die zweite Wickelachse (79) gewickelt wird.

## Revendications

1. Appareil de mise en balles destiné à former un matériau en une balle cylindrique (2), l'appareil (1) de mise en balles comprenant une presse à balles (16), qui définit une chambre (23) de formation de balles définissant un axe central principal géométrique (25) s'étendant longitudinalement, et dans lequel la balle (2) est formée, la presse à balles (16) comprenant au moins deux segments (20, 21, 22), au moins un (21) qui est mobile par rapport à l'autre (20, 22) entre un état de formation de balle moyennant quoi les segments (20, 21, 22) coopèrent pour former la chambre (23) de formation de balle, et un état de décharge dans lequel deux des segments (21, 22) définissent une ouverture de décharge (40) de la chambre (23) de formation de balle pour permettre la décharge de la balle (2) à partir de celle-ci, un support (18, 50, 54, 55) de balle positionné de manière adjacent à la presse à balles (16) pour recevoir une balle (2) déchargée de celle-ci et pour soutenir la balle (2) pendant son emballage, **caractérisé en ce qu'**un premier distributeur (63) est positionné sur un côté de l'ouverture de décharge (40) en vue de distribuer un matériau d'emballage (64) afin d'emballer la balle (2) en circonférence, un moyen de maintien (69) est positionné sur le côté opposé de l'ouverture de décharge (40) à celui sur lequel le premier distributeur (63) est positionné pour saisir le matériau d'emballage (64) s'étendant du premier distributeur (63) le matériau d'emballage (64) s'étendant à travers l'ouverture de décharge (40), de sorte que lorsque la balle (2) est déchargée de la chambre (23) de formation de balle à travers l'ouverture de décharge (40) sur le support (18, 50, 54, 55) de balle, le matériau d'emballage (64) est engagé par la surface circonférentielle (5) de la balle (2), et est tiré du premier distributeur (63) sur la balle (2) pour s'étendre de manière circonférentielle en partie autour de la surface circonférentielle (5) de la balle (2).

2. Appareil de mise en balles tel que revendiqué dans la revendication 1 **caractérisé en ce que** le support (18, 50, 54, 55) de balle comprend un moyen (54,55) de rotation de balle pour faire tourner la balle (2) soutenue dessus autour d'un premier axe d'enroulement (61) coïncidant sensiblement avec un axe géométrique central (3) de la balle (2), de sorte qu'à mesure que le moyen (54, 55) de rotation de balle fait tourner la balle (2), le matériau d'emballage (64) est tiré du premier distributeur (63) pour envelopper la balle (2) de manière circonférentielle autour de la surface circonférentielle (5) de celle-ci.

3. Appareil de mise en balles tel que revendiqué dans la revendication 2 **caractérisé en ce qu'**un deuxième distributeur (72, 73) est monté pour tourner autour du support (18, 50, 54, 55) de balle afin de distribuer un matériau d'emballage (71) sur la balle (2), le deuxième distributeur (72, 73) pouvant tourner autour d'un deuxième axe d'enroulement (79) s'étendant à un angle supérieur à zéro par rapport au premier axe d'enroulement (61) pour envelopper la balle (2) avec le matériau d'emballage (71) du deuxième distributeur (72, 73) s'étendant axialement autour de l'extrémité (6) de la balle (2) à l'extrémité (6) parallèle à l'axe géométrique central (3) de la balle (2).

4. Appareil de mise en balles tel que revendiqué dans la revendication 3 **caractérisé en ce que** le deuxième distributeur (72, 73) peut être utilisé pour distribuer au moins un tour du matériau l'emballage (71) du deuxième distributeur (72, 73) autour de la balle (2) le matériau d'emballage (64) du premier distributeur s'étendant en partie autour de la balle avant que le moyen (54, 55) de rotation de balle ne mette en rotation la balle (2) afin de retenir le matériau d'emballage (64) du premier distributeur (63) sur la surface circonférentielle (5) de la balle (2).

5. Appareil de mise en balles tel que revendiqué dans la revendication 3 ou 4 **caractérisé en ce que** le moyen (54, 55) de rotation de balle peut être utilisé pour faire tourner la balle (2) autour du premier axe d'enroulement (61) simultanément à la rotation du deuxième distributeur (72, 73) autour du deuxième axe d'enroulement (79) pour envelopper simultanément la balle (2) avec le matériau d'emballage (64, 71) des premier et deuxième distributeurs (63, 72, 73) .

6. Appareil de mise en balles tel que revendiqué dans l'une quelconque des revendications 3 à 5 **caractérisé en ce que** le deuxième axe d'enroulement (79) autour duquel le deuxième distributeur (72, 73) peut tourner s'étend sensiblement perpendiculairement au premier axe d'enroulement (61) autour duquel la balle (2) est mise en rotation par le moyen (54, 55) de rotation de balle, et coupe le premier axe d'enroulement (61) autour duquel la balle (2) est mise en rotation par le moyen (54, 55) de rotation de balle sensiblement à mi-chemin entre des extrémités respectives (6) axialement opposées de la balle (2).

7. Appareil de mise en balles tel que revendiqué dans l'une quelconque des revendications 2 à 6 **caractérisé en ce que** le premier axe d'enroulement (61) autour duquel le moyen (54, 55) de rotation de balle fait tourner la balle (2) s'étend parallèlement à l'axe central principal (25) défini par la chambre (23) de formation de balle.

8. Appareil de mise en balles tel que revendiqué dans l'une quelconque des revendications précédentes, **caractérisé en ce que** le premier distributeur (63) est positionné pour maintenir un rouleau du matériau d'emballage (64) avec l'axe géométrique central s'étendant longitudinalement du rouleau du matériau d'emballage s'étendant parallèlement à l'axe central principal (25) défini par la chambre (23) de formation de balle.

9. Appareil de mise en balles tel que revendiqué dans l'une quelconque des revendications précédentes, **caractérisé en ce qu'**un moyen de sollicitation principal (85, 86, 88) est prévu pour solliciter une partie du matériau d'emballage (64) s'étendant entre le premier distributeur (63) et la balle (2) soutenue sur le support (18) de balle dans un engagement avec le moyen de maintien (69).

10. Appareil de mise en balles tel que revendiqué dans l'une quelconque des revendications précédentes, **caractérisé en ce que** le premier distributeur (63) est monté sur un segment supérieur (21) parmi les segments (20, 21, 22) qui définit la chambre (23) de formation de balle.

11. Enveloppeur de balles destiné à envelopper une balle cylindrique (2, 102) avec un matériau d'emballage (64, 71), l'enveloppeur de balle (18, 100) comprenant un support (18) de balle destiné à soutenir la balle (2, 102) pendant l'emballage, un moyen de transfert (22, 105) destiné à transférer une balle (2, 102) à emballer le long d'un lieu de transfert (A) sur le support (18) de balle, **caractérisé en ce qu'**un premier distributeur (63) est positionné pour distribuer le matériau d'emballage (64) afin d'emballer de manière circonférentielle la balle (2, 102), et un moyen de maintien (69) est écarté du premier distributeur (63) pour maintenir le matériau d'emballage (64) le matériau d'emballage (64) s'étendant du premier distributeur (63) le long du lieu de transfert (A), pour qu'à mesure que la balle (2, 102) est transférée le long du lieu de transfert (A) sur le support (18) de balle, le matériau d'emballage (64) est engagé par la surface circonférentielle (5) de la balle (2, 102), et est tiré du premier distributeur (63) sur la balle (2, 102) pour s'étendre de manière circonférentielle en partie autour de la surface circonférentielle (5) de la balle (2, 102).

12. Enveloppeur de balles tel que revendiqué dans la revendication 11 **caractérisé en ce que** le support (18) de balle comprend un moyen (54, 55) de rotation de balle pour faire tourner la balle (2, 102) soutenue sur celui-ci autour d'un premier axe d'enroulement (61) coïncidant sensiblement avec un axe géométrique central (3) de la balle (2, 102), de sorte qu'à mesure que la balle (2, 102) est mise en rotation par le moyen (54, 55) de rotation de balle ; le matériau d'emballage (64) est tiré du premier distributeur (63) pour envelopper la balle (2, 102) de manière circonférentielle autour de la surface circonférentielle (5) de celle-ci.

13. Enveloppeur de balles tel que revendiqué dans la revendication 12 **caractérisé en ce qu'**un deuxième distributeur (72, 73) est prévu pour en distribuer le matériau d'emballage (71) en vue d'emballer la balle (2, 102) soutenue sur le support (18) de balle, le deuxième distributeur (72, 73) pouvant tourner autour d'un deuxième axe d'enroulement (79) s'étendant à un angle supérieur à zéro par rapport au premier axe d'enroulement (61), pour qu'à mesure que le deuxième distributeur (72, 73) tourne autour du deuxième axe d'enroulement (79), le matériau d'enroulement (71) est tiré du deuxième distributeur (72, 73) et enroulé autour de la balle (2, 102) dans une direction générale autour du deuxième axe d'enroulement (79).

14. Enveloppeur de balle tel que revendiqué dans la revendication 13 **caractérisé en ce que** le deuxième distributeur (72, 73) peut tourner autour du deuxième axe d'enroulement (79) en même temps que le moyen (54, 55) de rotation de balle fait tourner la balle autour du premier axe d'enroulement (61) pour envelopper la balle (2, 102) avec le matériau d'emballage (64) du deuxième distributeur (72, 73) avec le matériau d'emballage (71) s'étendant dans la direction générale autour du deuxième axe d'enroulement (79).

15. Enveloppeur de balles tel que revendiqué dans la revendication 13 ou 14 **caractérisé en ce que** les premier et deuxième distributeurs (63, 72, 73) sont agencés l'un par rapport à l'autre de telle sorte que le matériau d'emballage (64) soit tiré du premier distributeur (63) en même temps que le matériau d'emballage (71) est tiré du deuxième distributeur (72, 73) lorsque le moyen (54, 55) de rotation de balle fait tourner la balle (2, 102) autour du premier axe d'enroulement (61) en même temps que le deuxième distributeur (72, 73) tourne autour du deuxième axe d'enroulement (79) pour envelopper simultanément la balle (2, 102) avec le matériau d'emballage (64) du premier distributeur (63) s'étendant de manière circonférentielle autour de la balle (2, 102) dans la direction générale autour du premier axe d'enroulement (61) et pour envelopper la balle avec le matériau d'emballage (71) du deuxième distributeur (72, 73) s'étendant dans la direction générale autour du deuxième axe d'enroulement (79).

16. Enveloppeur de balles destiné à envelopper une balle (2, 102) avec un matériau d'emballage (64, 71), l'enveloppeur de balles comprenant un support (18) de balle destiné à soutenir la balle (2, 102) pendant l'emballage, un moyen de transfert (22, 105) destiné à transférer la balle (2, 102) à envelopper le long d'un lieu de transfert (A) sur le support (18) de balle, **caractérisé en ce qu'**un premier distributeur (63) est positionné pour distribuer le matériau d'emballage (64) afin d'envelopper la balle (2, 102), et un moyen de maintien (69) est écarté du premier distributeur (63) pour maintenir le matériau d'emballage (64) avec le matériau d'emballage (64) s'étendant du premier distributeur (63) et s'étendant le long du lieu de transfert (A), pour qu'à mesure que la balle (2, 102) est transférée le long du lieu de transfert (A) sur le support (18) de balle, le matériau d'emballage (64) est engagé par la balle (2, 102), et est tiré du premier distributeur (63) sur la balle (2, 102) de sorte que lorsque la balle (2, 102) est transférée sur le support (18) de balle, le matériau d'emballage (64) s'étend en partie autour de la balle (2, 102) dans une direction générale autour d'un premier axe d'enroulement (61), et un moyen (54 , 55) de rotation de balle fait tourner la balle (2, 102) soutenue sur le support (18) de balle autour du premier axe d'enroulement (61) pour tirer le matériau d'emballage (64) du premier distributeur (63) afin d'envelopper la balle (2, 102) avec le matériau d'emballage (64) s'étendant autour de la balle (2, 102) dans la direction générale autour du premier axe d'enroulement (61).

17. Enveloppeur de balles tel que revendiqué dans la revendication 16 **caractérisé en ce qu'**un deuxième distributeur (72, 73) est prévu pour distribuer le matériau d'emballage (71) à partir de celui-ci pour envelopper la balle (2, 102) soutenue sur le support (18) de balle, le deuxième distributeur (72, 73) peut tourner autour d'un deuxième axe d'enroulement (79) s'étendant à un angle supérieur à zéro par rapport au premier axe d'enroulement (61) et est agencé de manière qu'à mesure que le deuxième distributeur (72, 73) tourne autour du deuxième axe d'enroulement (79), le matériau d'emballage (71) est tiré du deuxième distributeur (72, 73) et est enroulé autour de la balle (2, 102) dans une direction générale autour du deuxième axe d'enroulement (79).

18. Enveloppeur de balles tel que revendiqué dans la revendication 17 **caractérisé en ce que** le deuxième distributeur (72, 73) peut tourner autour du deuxième axe d'enroulement (79) en même temps que le moyen (54, 55) de rotation de balle fait tourner la balle (2, 102) autour du premier axe d'enroulement (61) pour envelopper la balle (2, 102) avec le matériau d'emballage (71) du deuxième distributeur (72, 73) avec le matériau d'emballage (71) s'étendant dans la direction générale autour du deuxième axe d'enroulement (79), et chaque tour du matériau d'emballage (71) du deuxième distributeur (72, 73) chevauchant un tour précédant immédiatement adjacent.

19. Procédé de formation et d'emballage d'une balle cylindrique de matériau, le procédé comprenant la formation de la balle (2) dans une presse à balles (16), le transfert de la balle (2) de la presse à balles (16) à travers l'ouverture de décharge (40) dans la presse à balles (16) par rapport à un support (18, 50, 54, 55) de balle adjacent à la presse à balles (16) sur lequel la balle (2) est soutenue pendant l'emballage, l'extension d'une feuille de matériau d'emballage (64) d'un premier distributeur (63) à travers l'ouverture de décharge (40) de la presse à balles (16), pour qu'à mesure que la balle (2) est transférée de la presse à balles (16) vers le support (18) de balle, une partie d'une surface circonférentielle (5) de la balle (2) est enveloppée de manière circonférentielle avec le matériau d'emballage (64) du premier distributeur (63).

20. Procédé tel que revendiqué dans la revendication 19 **caractérisé en ce que** le procédé comprend en outre la rotation de la balle (2) sur le support (18) de balle autour d'un premier axe d'enroulement (61) coïncidant sensiblement avec un axe géométrique central (3) s'étendant longitudinalement de la balle (2) pour tirer le matériau d'emballage (64) du premier distributeur (63) afin d'envelopper la surface circonférentielle (5) de la balle (2) de manière circonférentielle avec le matériau d'emballage (64).

21. Procédé tel que revendiqué dans la revendication 20 **caractérisé en ce que** la balle (2) est enveloppée avec le matériau d'emballage (71) tiré du deuxième distributeur (72, 73) à mesure que le deuxième distributeur (72, 73) tourne autour du support (18) de balle autour d'un deuxième axe d'enroulement (79) qui s'étend à un angle supérieur à zéro degré par rapport au premier axe d'enroulement (61) autour duquel la balle (2) est mise en rotation sur le support (18) de balle.

22. Procédé tel que revendiqué dans la revendication 21 **caractérisé en ce que** la balle (2) est mise en rotation autour du premier axe d'enroulement (61) simultanément à la rotation du deuxième distributeur (72, 73) autour du deuxième axe d'enroulement (72) en vue d'envelopper simultanément la balle (2) avec le matériau d'emballage (64, 71) des premier et deuxième distributeurs (63, 72, 73).

23. Procédé tel que revendiqué dans l'une quelconque des revendications 19 à 22 **caractérisé en ce que** le matériau d'emballage (64) du premier distributeur (63) a une largeur transversale supérieure à la longueur axiale de la balle (2), et le matériau d'emballage (64) est tiré du premier distributeur (63) de sorte que des parties du matériau d'emballage (64) ayant des bords latéraux opposés respectifs adjacents (64a) de celle-ci englobent la balle (2) pour engager des extrémités respectives opposées (6) axialement de celle-ci.

24. Procédé destiné à envelopper une balle cylindrique (2, 102) de matériau, le procédé comprenant le transfert de la balle (2, 102) le long d'un lieu (A) de transfert sur un support (18, 50, 54, 55) de balle, l'extension d'une feuille de matériau d'emballage (64) d'un premier distributeur (63) le long du lieu (A) de transfert pour qu'à mesure que la balle (2, 102) est transférée le long du lieu (A) de transfert sur le support (18) de balle, le matériau d'emballage (64) est engagé par la surface circonférentielle (5) de la balle (2, 102) et est tiré du premier distributeur (63) sur la balle (2102) pour s'étendre de manière circonférentielle autour de la surface circonférentielle (5) de la balle (2, 102).

25. Procédé tel que revendiqué dans la revendication 24 dans lequel le procédé comprend en outre la rotation de la balle (2, 102) sur le support (18) de balle autour d'un premier axe d'enroulement (61) coïncidant sensiblement avec un axe géométrique central (3) s'étendant longitudinalement de la balle (2, 102) pour tirer le matériau d'emballage (64) du premier distributeur (63) afin d'envelopper la surface circonférentielle (5) de la balle (2, 102) de manière circonférentielle avec le matériau d'emballage (64) .

26. Procédé tel que revendiqué dans la revendication 25 dans lequel la balle (2, 102) est enveloppée avec le matériau d'emballage (71) tiré du deuxième distributeur (72, 73) à mesure que le deuxième distributeur (72, 73) tourne autour du support (18) de balle autour d'un deuxième axe d'enroulement (79) qui s'étend à un angle supérieur à zéro degré par rapport au premier axe d'enroulement (61) autour duquel la balle (2, 102) est mise en rotation sur le support (18) de balle.

27. Procédé tel que revendiqué dans la revendication 26 **caractérisé en ce que** la balle (2) est mise en rotation autour du premier axe d'enroulement (61) simultanément à la rotation du deuxième distributeur (72, 73) autour du deuxième axe d'enroulement (72) en vue d'envelopper simultanément la balle (2) avec le matériau d'emballage (64, 71) des premier et deuxième distributeurs (63, 72, 73).

28. Procédé d'emballage d'une balle (2, 102) avec un matériau d'emballage (64, 71), le procédé comprenant le transfert de la balle (2, 102) à emballer le long d'un lieu (A) de transfert sur le support (18, 50, 54, 55) de balle, l'extension du matériau d'emballage (64) du premier distributeur (63) à un moyen (69) de maintien le long du lieu (A) de transfert pour qu'à mesure que la balle (2, 102) est transférée le long du lieu (A) de transfert sur le support (18) de la balle le matériau d'emballage (64) est engagé par la balle (2, 102) et est tiré du premier distributeur (63) sur la balle (2, 102) pour s'étendre en partie autour de la balle (2, 102) sur le support (18) de la balle autour du premier axe d'enroulement (61) pour tirer le matériau d'emballage (64) du premier distributeur (63) afin d'envelopper la balle (2, 102) avec le matériau d'emballage (64) s'étendant autour de la balle (2, 102) dans la direction générale autour du premier axe d'enroulement (61).

29. Procédé tel que revendiqué dans la revendication 28 **caractérisé en ce qu'**un deuxième distributeur (72, 73) tourne autour d'un deuxième axe d'enroulement (79) s'étendant à un angle supérieur à zéro par rapport au premier axe d'enroulement (61) pour emballer la balle (2, 102) soutenue sur le support (18) de balle avec un matériau d'emballage (71) du deuxième distributeur (72, 73), pour qu'à mesure que le deuxième distributeur (72, 73) tourne autour du deuxième axe d'enroulement (79), le matériau d'emballage (71) est tiré du deuxième distributeur (72, 73) et est enveloppé autour de la balle (2, 102) dans une direction générale autour du deuxième axe d'enroulement (79).
